(19) Europäisches Patentamt

European Patent Office

Office européen des brevets

(11) **EP 4 275 325 B1**

(12) **EUROPEAN PATENT SPECIFICATION**

(45) Date of publication and mention
of the grant of the patent:
**26.02.2025  Bulletin 2025/09**

(21) Application number: **21700108.0**

(22) Date of filing: **05.01.2021**

(51) International Patent Classification (IPC):
**H04L 9/40** *(2022.01)*          **G06F 21/62** *(2013.01)*

(52) Cooperative Patent Classification (CPC):
**H04L 63/0807; G06F 21/629**

(86) International application number:
**PCT/EP2021/050071**

(87) International publication number:
**WO 2022/148527 (14.07.2022 Gazette 2022/28)**

(54) **GENERATING SECURE CALENDAR DATA**

ERZEUGUNG SICHERER KALENDERDATEN

GÉNÉRATION DE DONNÉES DE CALENDRIER SÉCURISÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.11.2023  Bulletin 2023/46**

(73) Proprietor: **Tell Money Limited**
**London N1 7SR (GB)**

(72) Inventors:
• **MONTY, David**
**Mitcham Surrey CR4 2DG (GB)**
• **POOLE, Anthony**
**Finmere Oxfordshire  MK18 4AS (GB)**

(74) Representative: **Hoffmann Eitle**
**Patent- und Rechtsanwälte PartmbB**
**Arabellastraße 30**
**81925 München (DE)**

(56) References cited:
**US-A1- 2016 342 955     US-A1- 2017 083 871
US-A1- 2018 374 171     US-A1- 2020 104 473
US-B1- 10 735 191**

## Description

### TECHNICAL FIELD

Example aspects herein relate to the generation of secure calendar data, and more particularly to a computer-implemented method, a system, a computer program and a server for generating secure calendar data for a user device.

### BACKGROUND

US 2016/0342955 A1 discloses multi-entity calendar and time management displays and methods of use. An example multi-entity calendar interface includes savers for a plurality of entities, the savers having calendar events for an entity, the calendar events arranged in columnar format such that calendar events are displayed for each of the plurality of entities simultaneously in the multi-entity calendar interface, the calendar events being aligned with one another across the calendar interface according to time.

Calendar applications running on user devices such as mobile telephones, tablet computers, laptop computers, desktop computers, smart watches, e-book readers, etc. assist users in organising their schedule by storing and displaying information for entries such as meetings, appointments, tasks, etc. concerning the user.

To allow the user to access the calendar information from more than one device, or to allow the calendar information to be shared with other users and/or with organisations, calendar data containing the calendar information is stored on a server which distributes the calendar data to multiple user devices.

Each user device and the server recurrently synchronise their calendar data, which ensures that all user devices contain up-to-date calendar data.

However, although this makes the calendar data more accessible, a technical problem arises because the security of the calendar data is reduced.

Typically, calendar servers attempt to secure the calendar data by requiring valid credentials (typically a user identifier and a password) to be provided by any device requesting access to the calendar data.

However, with the typical solution summarised above, an unauthorised party could obtain the credentials and fraudulently gain access to the calendar data from the server. In addition, the typical solution summarised above is prone to bypass attacks which circumvent the client layer.

### SUMMARY

According to the present invention, there is provided a computer-implemented method as set out in claim 1.

The present invention also provides a system as set out in claim 15.

The present invention further provides a computer program as set out in claim 16.

Optional features are set out in the dependent claims.

### BRIEF DESCRIPTION OF THE DRAWINGS

Figure 1 is a schematic diagram showing an example of a system in example embodiments.

Figure 2 is a schematic diagram showing an example of a user device with a calendar application and storing calendar data in example embodiments, and an example of a display of calendar information on the user device in example embodiments.

Figure 3 is a schematic diagram showing a server storing calendar data for each of a plurality of user devices according to example embodiments.

Figure 4 schematically shows an example of a general kind of programmable processing apparatus that may be used to implement a user device and/or a server in example embodiments.

Figures 5A to 5D show processing operations performed by a server and a user device in an example embodiment.

Figure 6 shows processing operations performed by a server to authenticate a request for calendar synchronisation in an example embodiment.

Figure 7 shows processing operations performed by the server to restrict the user device from accessing content data in a first example implementation.

Figures 8A and 8B show processing operations performed by the server to restrict the user device from accessing content data in a second example implementation.

Figure 9 shows an example of a user interface of a calendar application on a user device showing calendar data when the content data of each calendar object is replaced with dummy data in the second example implementation.

Figure 10 shows processing operations performed by the server to restrict the user device from accessing content data in a third example implementation.

Figures 11A and 11B shows processing operations performed in example embodiments by a server for generating secure calendar data for a user device.

## DETAILED DESCRIPTION

According to a first example aspect herein, a computer-implemented method is performed by a server, for generating secure calendar data for a user device. A first calendar object associated with a first date and comprising a first secure token is generated. The first calendar object is stored on the server. The first calendar object is provided to the user device. A plurality of further calendar objects are stored on the server for communication to the user device, each of the further calendar objects being associated with a respective date and comprising content data defining an entry in the calendar. A request for calendar synchronisation is received from the user device. A second calendar object associated with a second date and comprising a second secure token is generated. The second calendar object is stored on the server. The user device is notified of a respective version of the first calendar object, the second calendar object, and each of the plurality of further calendar objects stored on the server, wherein the user device is notified that the first calendar object on the server has a version older than the first calendar object provided to the user device. The server receives from the user device the first calendar object and any calendar object stored on the user device having a version that is newer on the user device than the version notified by the server. The request is authenticated bycomparing the first secure token from the first calendar object received from the user device and the first secure token from the first calendar object stored on the server. Upon successful authentication of the request, the server provides to the user device the second calendar object comprising the second secure token and any calendar object of the plurality of further calendar objects stored on the server having a version that is newer on the server than on the user device. Upon unsuccessful authentication of the request, the server restricts the user device from accessing the content data in the further calendar objects.

According to a second example aspect herein, there is provided a system for generating secure calendar data, the system comprising a server configured to generate the secure calendar data by performing a process as set out above.

According to a third example aspect herein, there is provided a computer program comprising instructions which, when executed by at least one processor, cause the at least one processor to perform a method as set out above.

According to a further example aspect herein, there is provided a computer-readable storage medium storing the computer program of the third example aspect.

According to a further example aspect herein, there is provided a signal carrying the computer program according to the third example aspect.

According to a further example aspect herein, there is provided a server comprising at least one processor and at least one memory storing computer-readable instructions, which, when executed by the at least one processor, cause the at least one processor to perform a method as set out above.

According to another example aspect herein, there is provided a non-transitory storage medium storing computer-readable instructions which, when executed by at least one processor, cause the at least one processor to:

generate a first calendar object associated with a first date and comprising a first secure token;

store the first calendar object on a server;

provide the first calendar object to a user device;

store on the server a plurality of further calendar objects for communication to the user device, each of the further calendar objects being associated with a respective date and comprising content data defining an entry in the calendar;

receive a request for calendar synchronisation from the user device;

generate a second calendar object associated with a second date and comprising a second secure token;

store the second calendar object on the server;

notify the user device of a respective version of the first calendar object, the second calendar object, and each of the plurality of further calendar objects stored on the server, wherein the user device is notified that the first calendar object on the server has a version older than the first calendar object provided to the user device;

receive from the user device the first calendar object and any calendar object stored on the user device having a version that is newer on the user device than the version notified by the server;

authenticate the request by comparing the first secure token from the first calendar object received from the user device and the first secure token from the first calendar object stored on the server;

upon successful authentication of the request, provide to the user device the second calendar object comprising the second secure token and any calendar object of the plurality of further calendar objects stored on the server having a version that is newer on the server than on the user device; and

upon unsuccessful authentication of the request, restrict the user device from accessing the content data in the further calendar objects.

According to another example aspect herein, there is provided a server comprising at least one processor and at least one memory storing computer-readable instructions which, when executed by the at least one processor, cause the at least one processor to:

generate a first calendar object associated with a first date and comprising a first secure token;

store the first calendar object in a memory on the server;

provide the first calendar object to a user device;

store in a memory on the server a plurality of further calendar objects for communication to the user device, each of the further calendar objects being associated with a respective date and comprising content data defining an entry in the calendar;

receive a request for calendar synchronisation from the user device;

generate a second calendar object associated with a second date and comprising a second secure token;

store the second calendar object in a memory on the server;

notify the user device of a respective version of the first calendar object, the second calendar object, and each of the plurality of further calendar objects stored on the server, wherein the user device is notified that the first calendar object on the server has aversion older than the first calendar object provided to the user device;

receive from the user device the first calendar object and any calendar object stored on the user device having a version that is newer on the user device than the version notified by the server;

authenticate the request by comparing the first secure token from the first calendar object received from the user device and the first secure token from the first calendar object stored on the server;

upon successful authentication of the request, provide to the user device the second calendar object comprising the second secure token and any calendar object of the plurality of further calendar objects stored on the server having a version that is newer on the server than on the user device; and

upon unsuccessful authentication of the request, restrict the user device from accessing the content data in the further calendar objects.

Although example embodiments will be described below, it will be evident that various modifications may be made to these example embodiments without departing from the broader scope of the invention. Accordingly, the following description and the accompanying drawings are to be regarded as illustrative rather than restrictive.

In the following description and in the accompanying figures, numerous details are set forth in order to provide an understanding of various example embodiments. However, it will be evident to those skilled in the art that embodiments may be practiced without these details.

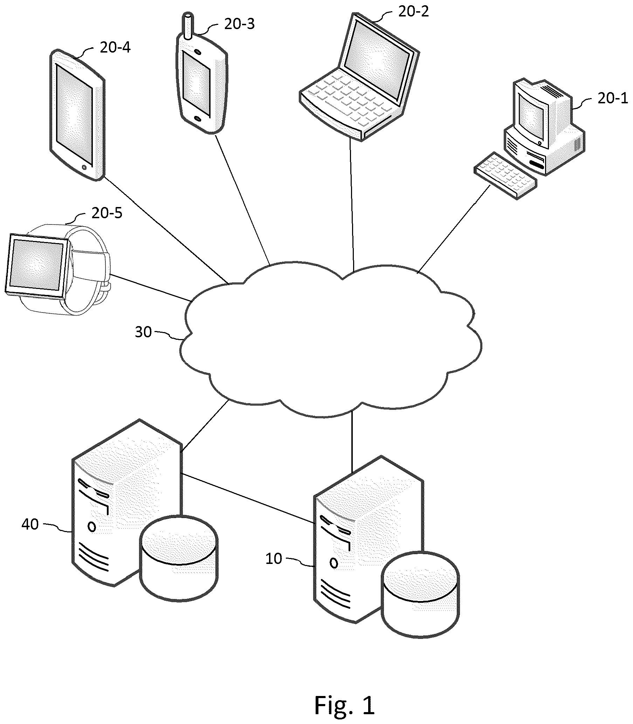

Figure 1 is a schematic diagram showing an example of a system in an example embodiment. In the example, a plurality of user devices 20-1, 20-2, 20-3, 20-4, 20-5, communicate with a server 10 via a network 30. Also shown is a further server 40 which can communicate with the server 10, for example via the network 30 or via an optional secure direct connection. One or more of the user devices 20-1, 20-2, 20-3, 20-4, 20-5 may optionally be able to communication with the server 40. Five user devices are shown in Figure 1 by way of example, although there may be more than this or fewer. Similarly, one server 10 and one further server 40 are shown in Figure 1 by way of example, but it should be understood that the system is scalable to more than one of each of these servers 10, 40.

Aspects of the configuration and processing operations of each user device 20-1, 20-2, 20-3, 20-4, 20-5, server 10 and server 40 that are helpful for understanding embodiments are described in detail below, while the description of other aspects, which will be familiar to those skilled in the art, is omitted for the sake of clarity.

The network 30 may comprise one or more networks, such as the Internet, a telephone network, a cellular data network, etc. The network 30 may also comprise a virtual private network (VPN), a local area network (LAN), a wide area network (WAN), or any other form of network.

A user device may comprise any processing device that can run applications, such as a desktop computer 20-1, a laptop computer 20-2, a smartphone 20-3, a tablet computer 20-4, a smart watch 20-5, or some other form of processing device such as a games console, etc. Each of the user devices communicates with the network 30 through any suitable communication link, such as wireless communication link (for example a WiFi or cellular telephone data link) or a wire, fibre-optic cable, etc. Each communication link may not be permanent.

As will be explained in more detail below, a user device 20-1, 20-2, 20-3, 20-4, 20-5 (generally referred to as user device 20 hereinafter) runs a calendar application that can be used by a user of the device to view and edit information in a calendar through a user interface. This information, which will hereinafter be referred to as calendar information, may relate to any "entry" in the calendar of a user such as, by way of non-limiting examples, a scheduled event (such as a meeting, an appointment, a phone call, a conference, a seminar etc) an action to be done by the user on a particular date (such as a task, an item of a to-do list, etc), a journal entry for a particular date, or any information relevant to the user on a particular date. Accordingly, anything defined by the calendar information in the calendar of a user will herein be referred to as an "entry" in the calendar.

The calendar information is stored on the server 10, as calendar data, such that the server 10 may be referred to as a calendar server.

The server 10 is not limited to any particular form, and may comprise for example, processing and storage components in a single location or distributed processing and storage components such as in a cloud-based system.

The server 10 can generate the calendar data itself, or it may receive the calendar data from another entity, such as the further server 40.

Each user device 20 can communicate with the server 10 via the network 30 to obtain the calendar data.

A user device 20 stores the calendar data obtained from the server 10 via the network 30, and processes the calendar data to present calendar information to the user via the calendar application. In addition, the user device itself may enter calendar data in the calendar application, for example by direct input by a user (for example by typing or voice command) and/or via another application on the user device, such as an email application which receives an event invitation by email.

Various protocols such as CalDAV, iCalendar, SyncML, Web Calendar Access Protocol, Webcal, ActiveSync Exchange standardise the format and content of the calendar data and/or the communications between the user device 20 and the server 10 to synchronise calendar data.

In these protocols, the calendar data is typically divided into elements, defined herein as calendar objects, each of which is associated with a respective date. Each calendar object contains content data and metadata. The content data comprises a part of the calendar information that relates to one or more entries in the calendar for a user of the user device 20, such as a name of an event, a description of an action to be performed by the user, information relevant to the user on a particular date etc, a date and time, a location, a list of other people relevant to the event/action/information, etc. The metadata is used by the server 10 and the user device 20 to process the calendar object, and comprises data about the calendar object, such as, information identifying the calendar object (e.g. a unique identifier, UID, a globally unique identifier GUID, a universally unique identifier, UUID etc.) the date associated with the calendar object, and a version of the calendar object that is incremented each time the calendar object is changed, whether it is a change of the metadata (other than the version), the content data, or both.

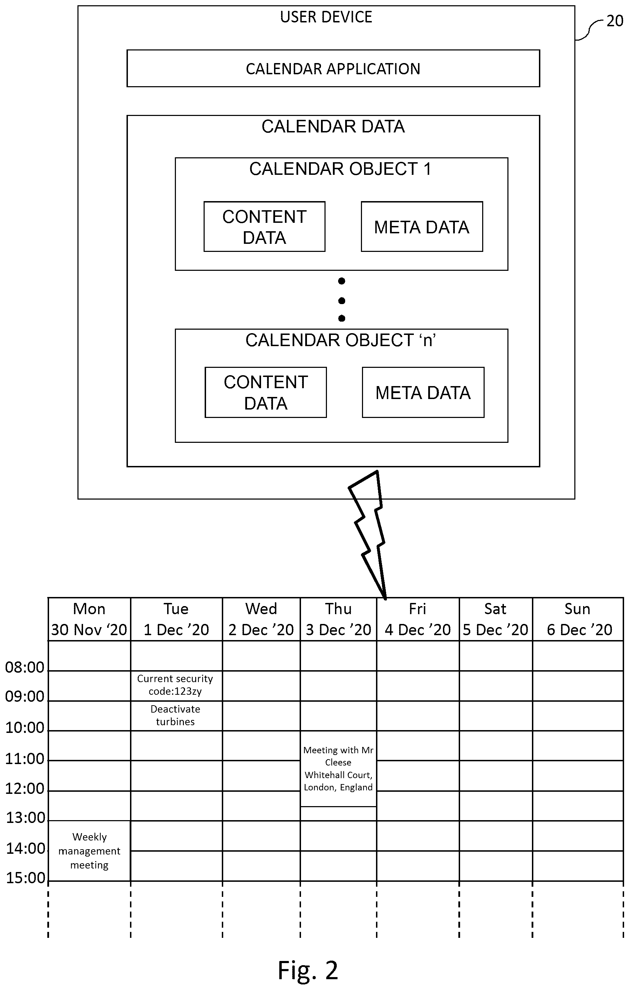

Referring now to Figure 2, an example of a user device 20 is shown.

The user device 20 runs a calendar application (e.g. by executing instructions in memory on the user device), and stores (e.g. in memory on the user device) calendar data for a user of the user device 20.

The calendar data comprises one or more calendar objects, labelled 1 to 'n' in the example of Figure 2. Each calendar object comprises content data and metadata.

When run, the calendar application can cause the user device to display a user interface showing the calendar information for the user. For example, as shown in Figure 2, the calendar information for the week of Monday 30 November 2020 to Sunday 6 December 2020 may be displayed to the user in a tabulated form, each column defining a day and each row a time range within that day. The calendar application processes the calendar objects and displays the content data that is relevant to the user viewing the user interface. Taking the exemplary calendar information shown in Figure 2, a first calendar object causes the user device to display "Weekly Management Meeting" in the column of Monday 30 November 2020 between the hours of 13:00 and 15:00, a second calendar object causes the user device to display "Current security code: 123xyz" in the column of Tuesday 1 December 2020 between the hours of 8:00 and 9:00, a third calendar object causes the user device to display the reminder "Deactivate turbines" in the column of Tuesday 1 December 2020 between the hours of 9:00 and 10:00 (which may, for example, require the user to utilise the current security code previously displayed to the user in order to perform the action of deactivating the turbines), and a fourth calendar object causes the user device to display "Meeting with Mr. Cleese, Whitehall Court, London, England" in the column of Thursday 3 December 2020, between the hours of 10:00 and 12:30. Although the above examples indicate a one-to-one correspondence between calendar objects and entries in the calendar (to be displayed on the user interface), it will be apparent to the skilled reader that a calendar object may correspond to more than one entry in the calendar to be displayed (e.g. recurring events, or events having multiple parts).

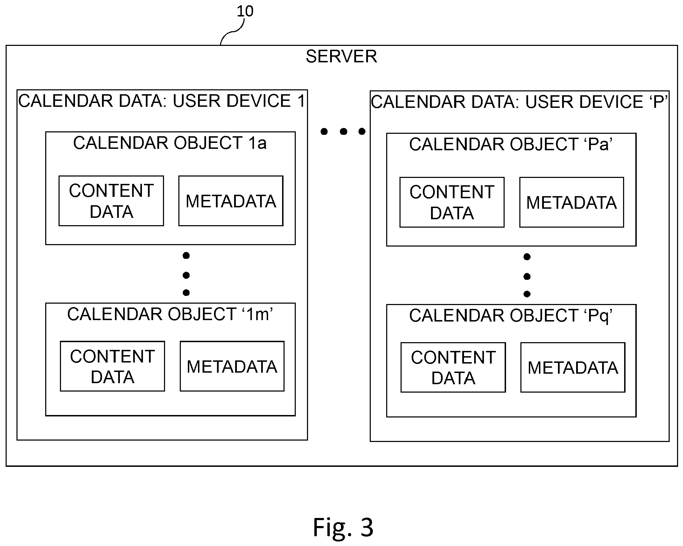

Referring now to Figure 3, an example of a server 10 is shown.

The server 10 stores calendar data for one or more user devices, labelled 1 to 'P' in the example of Figure 3.

Specifically, for each user device, the server stores one or more calendar objects, each calendar object comprising content data and metadata. In the example illustrated on Figure 3, the server 10 stores calendar objects '1a' to '1m' for the user device 1, and the server 10 stores calendar objects 'Pa' to 'Pq' for the user device 'P'.

Although Figure 3 shows the server 10 storing different calendar objects for each user device, a same calendar object may be associated with more than one user device (e.g. if more than one user device is authorised to access the content data in that calendar object, such as a first user sharing an entry with another user, or a user authorising more than one user device to access the calendar data).

The user device 20 sends requests for calendar synchronisation (the purpose of these requests being the synchronisation of the calendar data on the user device 20 with the calendar data on the server 10). During the subsequent synchronisation process, calendar data that has been changed on the server 10, or new calendar data that has been stored on the server 10, since the last synchronisation is sent from the server 10 to the user device 20. Similarly, calendar data that has been changed on the user device 20, or new calendar data that has been stored on the user device 20, since the last synchronisation is sent from the user device 20 to the server 10. However, in alternative implementations, calendar data that has been changed on the user device 20, or new calendar data that has been stored on the user device 20, since the last synchronisation may be sent to the server at a time prior to the user device 20 sending a request for calendar synchronisation.

The server 10 responds to a request for calendar synchronisation with information allowing the user device 20 to compare the calendar objects stored on the server 10 with the calendar objects stored on the user device 20, and to request from the server 10 calendar object(s) that have been updated on the server 10, or calendar object(s) that are not yet stored on the user device 20, such as those stored on the server 10 since the last synchronisation of calendar data. The information provided by the server 10 to the user 20 to facilitate this comparison of calendar objects comprises, for example, for each calendar object, information identifying a version of the calendar object (e.g. one or more letters, numbers, characters or any combination thereof defining a version of the calendar object that can be incremented with each modification of the calendar object) that is stored on the server 10.

This allows the user device 20 to determine, for each calendar object, whether a calendar object on the server 10 does not exist on the user device 20 or is newer than the corresponding calendar object stored on the user device 20 (i.e. has changed since the last synchronisation of calendar data between the user device 20 and the server 10), by comparing the version of the calendar object received from the server 10 and the (local) version of the calendar object stored on the user device 20.

The user device 20 can then request the calendar objects stored on the server 10 that are determined to be newer than the corresponding calendar objects stored on the user device 20, and any calendar object stored on the server 10 that are not stored on the user device 20.

At the same time, by comparing the version of calendar objects received from the server 10 and the version of calendar objects stored on the user device 20, the user device 20 can determine that one or more calendar objects stored on the user device 20 is newer than the corresponding calendar object stored on the server 10. In this case, the user device 20 provides the newer calendar object(s) to the server 10. The user device 20 also stores an indication of any calendar object(s) that have been created on the user device 20 since the last synchronisation of calendar data with the server 10. Accordingly, if the user device 20 does not receive a version of a calendar object stored on the user device 20, the user device 20 can determine whether this is because the calendar object was created on the user device 20 since the last synchronisation, or because the calendar object was previously stored on the server 10 but deleted since the last synchronisation. Any calendar object(s) created on the user device 20 since the last synchronisation is sent to the server 10. Accordingly, after the synchronisation, the server 10 holds the most up-to-date calendar data, which can then be distributed to any other device also having access rights. However, as explained above, in other implementations, any calendar object(s) created or modified on the user device 20 since the last synchronisation may be sent to the server 10 prior to the user device 20 sending the request for calendar synchronisation. In this case, when the server 10 receives the request for calendar synchronisation, the server 10 already holds the most up-to-date calendar data.

The inventors have devised a mechanism to improve the security of the calendar data, by reducing risks of unauthorised access.

By way of overview, the server 10 generates a first calendar object associated with a first date and comprising a first secure token, that is then stored on the server 10 and provided to the user device 20.

Subsequently, when the server 10 receives a request for calendar synchronisation from the user device 20, the server 10 notifies the user device 20 that the first calendar object on the server 10 has a version older than the first calendar object provided to the user device 10.

As a result, when the user device 20 compares the version of the first calendar object received from the server 10 with the version notified by the server in response to the synchronisation request, the user device 20 determines that the first calendar object stored on the user device 20 is newer than the corresponding first calendar object stored on the server 10. This leads the user device 20 to send the version of the first calendar object stored on the user device 20 to the server 10.

Accordingly, the server 10 receives the first calendar object stored on the user device 20 and can retrieve the first secure token in the first calendar data received from the user device 20. The server 10 can then use the retrieved first secure token to authenticate that the request for calendar synchronisation came from a user device 20 that is authorised to access the calendar data.

Therefore, the first secure token acts as a security credential for the user device 20 trying to access the calendar data stored on the server 10.

At each synchronisation request, a new secure token can be generated by the server 10 and provided to the user device 20, ensuring each secure token is only used to authenticate a request for calendar synchronisation once. This provision of secure tokens can thereby ensure that the chain of requests for synchronisation are all coming from a user device 20 that is authorised to access the calendar data.

Additionally, by providing the first secure token in a first calendar object, the server 10 causes the user device 20 to store the first secure token as a normal calendar object. Therefore, no additional instructions to the calendar application running on the user device 20 on how to process the calendar object, and no modification of the calendar application, is necessary.

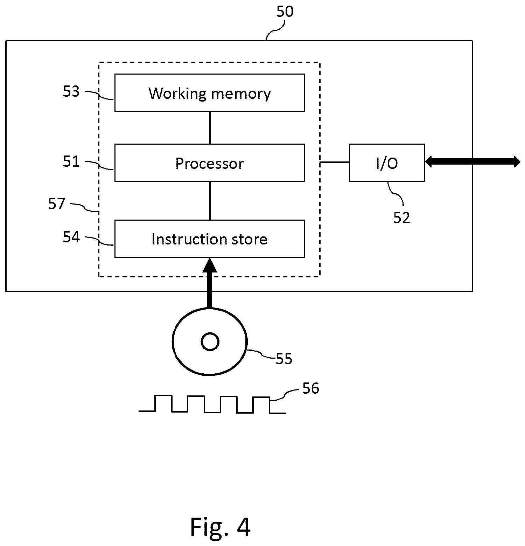

Referring now to Figure 4, an example of a general kind of programmable processing apparatus 50 that may be used to implement a user device 20, the server 10 and/or the server 40 is shown.

The programmable processing apparatus 50 comprises one or more processors 51, one or more input/output communication modules 52, one or more working memories 53, and one or more instruction stores 54 storing computer-readable instructions which can be executed by one or more processors 51 to perform the processing operations as described hereinafter.

An instruction store 54 is a non-transitory storage medium, which may comprise a non-volatile memory, for example in the form of a read-only-memory (ROM), a flash memory, a magnetic computer storage device (for example a hard disk) or an optical disk, which is pre-loaded with the computer-readable instructions. Alternatively, an instruction store 54 may comprise writeable memory, such as random access memory (RAM) and the computer-readable instructions can be input thereto from a computer program product, such as a non-transitory computer-readable storage medium 55 (for example an optical disk such as a CD-ROM, DVD-ROM, etc) or a computer-readable signal 56 carrying the computer-readable instructions. The combination 57 of hardware components shown in Figure 4 and the computer-readable instructions are configured to implement the functionality of the user device 20, the server 10 and/or the server 40.

In the description herein, operations caused when a processor 51 executes instructions stored in an instruction store 54 will be described generally as operations performed by the user device 20 (e.g. "the user device 20 determines ...", "the user device 20 stores ...", etc).

For ease of reference, the following describes interaction between the server 10 and a single user device 20. However, the interaction between the server 10 and each other user device 20 is the same, except that, for example, each user device 20 will be registered separately with the server 10 and the server will provide different calendar objects and different secure tokens to each user device.

Before the processing operations of the server 10 and user device 20 hereinafter described are performed, the user of the user device 20 registers with the server 10. The user provides information to the server 10 that will allow the server 10 to identify the user (i.e. to differentiate the user from other users registered with the server 10 to obtain calendar data), such as an email address of the user, a mobile telephone number of the user, etc, and optionally a username and/or a password (which may include letters, numbers, characters or any combination thereof).

The present invention is not limited to a particular registration process, and any known registration process allowing the server 10 to obtain information for identifying the user can be used. During the registration process, the server 10 generates credentials for the user and stores the credentials in association the information for identifying the user. For example, the credentials may include a password and a username. The username and/or password may be provided by the user (as explained above), generated by the server 10 automatically, or generated by the server 10 based on input(s) from the user (e.g. the user may select a username and/or password and the server may add and/or change letters, numbers and/or characters in the user inputted username and/or password to attain a predefined threshold of security).

Additionally, if the user registers with the server 10 using the user device 20, the server 10 may obtain additional information relating to the user device 20 during the registration process, such as one or more parameters that are characteristic of the user device 20 (e.g. an IP and/or MAC address of the user device, an IMEI number, a device UUID, a serial number of the device). These parameters may be used for identifying the user device 20 and/or the user, and may be determined by the server 10 based on any information exchanged with the user device 20. Optionally, the server may obtain other parameters from the request to register with the server, such as an operating system and version thereof running on the user device, an interface version and manufacturer, a name and version of an internet browser on the user device 20 that is used to process communications with the server 10, an application provisioning date and/or time, a timestamp (e.g. a Unix timestamp) at which a request to register with the server is transmitted, etc.

For simplicity, for the purpose of the description below, it is assumed that, at least one of an email address of the user and a mobile telephone number of the user, obtained during the registration process, are stored in association with the credentials generated for the user, on a database managed by the server 10.

The processing operations performed by the server 10 and the user device 20 will now be described.

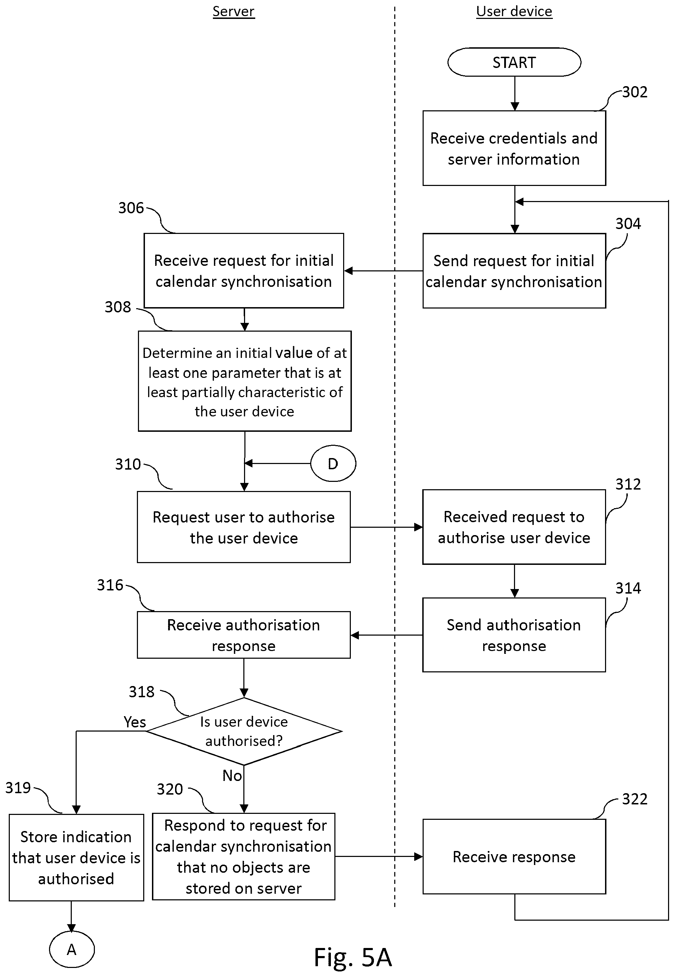

Referring to Figure 5A, at step 302, the user device 20 receives from the server 10 credentials and server information for accessing calendar data on the server 10.

More particularly, after the registration process, the server 10 transmits the credentials and server information to the user device 20.

The server information is any information allowing the user device 20 to communicate with the server 10, and can include, for example, a Uniform Resource Locator (URL) indicating an address of the server 10 where calendar data is stored. The server information may optionally include information such as a host name indicating a web server address of the server hosting the calendar data, a host port number that connects to the host server, and an indication of the security to be used to communicate with the server such as the use of Transport Layer Security (TLS) or Secure Socket Layer (SSL).

In the present example embodiment, the server 10 transmits the credentials and the server information in the body of the email sent to the email address of the user and/or as a text message (SMS) sent to the mobile telephone number of the user. The user then inputs the credentials and the server information into the calendar application manually.

At step 304, the user device 20 transmits a request for an initial calendar synchronisation to the server 10, using the server information, and includes the credentials in the request.

In the present example embodiment, the user device 20 and the server 10 communicate based on the HyperText Transport (HTTP), Web Distributed Authoring (WebDAV) protocols and the CalDAV extension of WebDAV, as specified in standardising documents such as the Internet Engineering Task Force (IETF)'s documents RFC 4791, RFC 4918, RFC 6578, and related documents. In the present example embodiment, a request for calendar synchronisation is a CalDAV REPORT request. Thus, in the present example embodiment, the user device 20 transmits, as the initial calendar synchronisation request, a CalDAV REPORT request to the address indicated by the URL from the server information, including a username and a password included in the credentials.

At step 306, the server 10 receives the request for the initial calendar synchronisation and performs a first authentication using the credentials. In the present example embodiment, the server 10 performs the first authentication by checking the database storing credentials that have been generated on the server 10 for users in association with at least one of the email address of the user and the mobile telephone number of the user. The server 10 determines that the request is authentic if the combination of the username and password received in the request for the initial calendar synchronisation are stored in the database.

If the received credentials are determined not to correspond to authentic credentials (e.g. the username and/or password does not match a user name and/or password stored in the server 10), the server 10 may transmit a response to the request indicating that the credentials are invalid, that the request for calendar synchronisation is refused and/or that the user device 20 is not authorised to access the calendar data (for example, an HTTP:403 Forbidden response).

At step 308, the server 10 determines, based on the received synchronisation request, an initial value of at least one parameter that is characteristic of the user device, such as an IP and/or MAC address of the user device, an IMEI number, a device UUID, a serial number of the device. Optionally, the server 10 may also determine an initial value of at least one parameter characteristic of the received synchronisation request, such as an operating system and version thereof running on the user device, an interface version and manufacturer, a name and version of an internet browser on the user device 20 that is used to process communications with the server 10, an application provisioning date and/or time, a timestamp (e.g. a Unix timestamp) at which the request is transmitted, etc. For simplicity, it will be assumed in the present example embodiment that the server 10 determines initial values of the IP address of the user device 20 and an IMEI number of the user device 20.

At step 310, the server 10 requests the user to authorise the user device 20 via a separate channel, using the information identifying the user that is stored on the server 10 in association with the credentials received at step 306.

More particularly, in the present example embodiment, the server 10 stores at least one of the email address and the mobile telephone number of the user in association with the credentials. The server 10 transmits a message to the user, via email if the server 10 stores an email address of the user and/or via a text message if the server 10 stores a mobile telephone number of the user. The message requests the user to confirm whether the user device 20 having made the request for the initial calendar synchronisation is authorised.

At step 312, the user device 20 receives the request to authorise the user device 20 via the separate channel. More particularly, in the present example embodiment, the user device 20 receives the message via email and/or text message and displays the message to the user on the user interface of a messaging application running on the user device (e.g. an email application or an SMS messaging application).

At step 314, the user confirms that the user device 20 is authorised, and the user device 20 sends an authorisation response. More particularly, in the present example embodiment, the user indicates to the server 10 that the user device 20 is authorised by replying to the message (e.g. by sending an email or a text message in response to the message).

At step 316, the server 10 receives the authorisation response. In the present example embodiment, the server 10 receives the authorisation response as an email or a text message from the user device 20 (i.e. from the user) confirming the user device 20 is authorised.

At step 318, the server 10 determines whether the user device 20 has been authorised by the user, for example, if a positive response from the user to the request to authorise the user device 20 has been received at step 316.

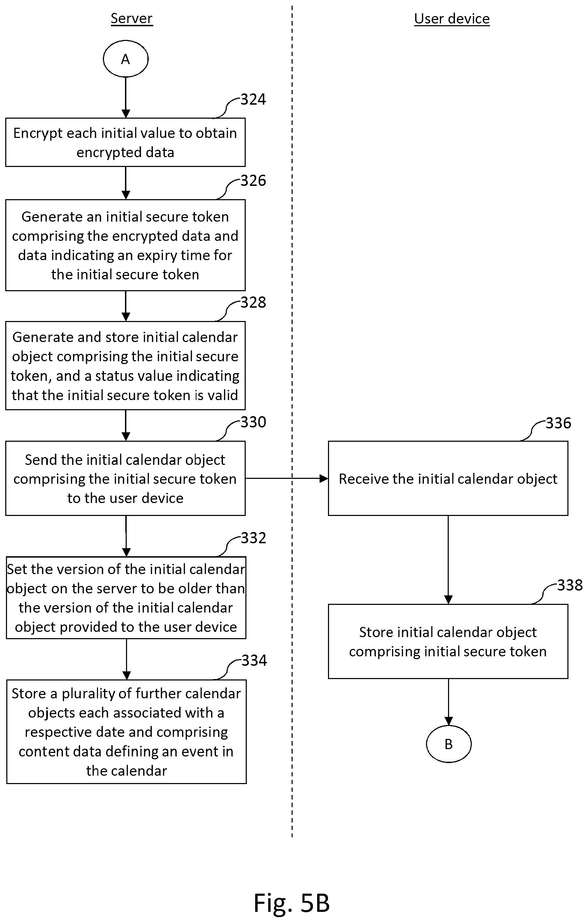

If the user device 20 is authorised, then, at step 319, the server 10 stores an indication that the user device 20 is authorised, which may be stored in association with information identifying the user device 20. In the present example embodiment, the server 10 stores the initial value(s) of the at least one parameter that is characteristic of the user device 20 in association with a device status value indicating that the user device 20 is authorised. Processing then proceeds to step 324 in Figure 5B, which will be explained further below. Otherwise (e.g. if no response or a negative response to the request to authorise the user device 20 has been received), process proceeds to step 320.

At step 320, the server 10 transmits a notification to the user device 20 in response to the synchronisation request that indicates that no calendar objects for that user device 20 are stored on the server 10 or need to be retrieved by the user device 20. In the present example embodiment, this is effected by the server 10 responding to the CalDAV REPORT request from the user device 20 with an empty list of calendar objects.

At step 322, the user device 20 receives the response from the server 10 and determines that it does not need to request for any calendar objects from the server 10.

The process then returns to step 304, at which the user device 20 re-attempts to synchronise calendar data with the server 10, causing the process of Figure 5A to be repeated until the user device 20 is authorised (YES at step 318).

With regard to the timing of step 304, the user device 20 may be configured to synchronise the calendar data with the server 10 periodically (e.g. every 5 minutes, every 15 minutes, every hour) and/or when a predetermined event occurs, such as a connection to the network 30 being re-established following a disconnection.

Referring now to Figure 5B, at step 324, the server 10 encrypts each initial value obtained at step 308, to obtain encrypted data (i.e. the initial value(s) of the at least one parameter characteristic to the user device 20, and, if any is/are determined at step 308, the initial value(s) of the at least one parameter characteristic of the received synchronisation request). In the present example embodiment, the server 10 performs the encryption using an Advance Encryption Standard, AES, encryption key which uses a symmetric encryption algorithm. The AES encryption key and the associated AES decryption key are encrypted using 3DES encryption and the three key part ciphers are stored in a secure environment, in three different secure locations on the server 10 and/or on another secure entity. However, the type of encryption is not limited to this form, and different forms of encryption may be performed instead.

At step 326, the server 10 generates an initial secure token comprising the encrypted data and data indicating an expiry time for the initial secure token. By way of non-limiting example, the expiry time may be set to 24, 48 or 72 hours from generation of the initial secure token.

The initial secure token may be generated as a string of characters using ASCII, alphanumeric or any other predefined set of characters, a first portion of the string of characters corresponding to the encrypted data and a second portion of the string of characters indicating the expiry time for the initial secure token. However, this method of generation is non-limiting, and other method of generation may be used instead.

At step 328, the server 10 generates an initial calendar object associated with a date and comprising the initial secure token.

For example, the server 10 may generate the initial calendar object and set a first property of the initial calendar object to indicate the date to be associated with the initial calendar object, and a second property of the initial calendar object to include the initial secure token.

When generating the initial calendar object, the server 10 may randomly generates a date to be associated with the initial calendar object, from a time range that precedes the date of generation of the initial calendar object by at least one month. Additionally, the server 10 may randomly generate a time as well as a date to be associated with the initial calendar object.

For example, if the server 10 generates the initial calendar object on 1 December 2020, the date to be associated with the initial calendar object may be randomly selected in the time range of 1 January 1970 to 1 November 2020. The server 10 may use any process for a random generation of value from a range of possible values such as processes using a pseudo-random value generator, when "randomly" generating a date and a time. By way of non-limiting example, the server 10 may randomly generate a date and time by adding a random amount of time (in hours, minutes, seconds) to a reference point in time, such as a random number of seconds from 1 January 1970, 00:00:00 GMT.

As calendar applications typically display the current month to the user, and as past entries are less likely to be of interest to the user of the user device 20, associating the initial calendar object with a date, and optionally a time, at least one month in the past reduces the risk that the initial calendar object is displayed to the user on the user interface of the calendar application. Thus, the user is less likely to view the initial calendar object and modify or delete it, which would alter/delete the initial secure token.

Accordingly, the time range from which the date is randomly generated may precede the date of generation of the initial calendar object by at least one month, at least one year, or longer.

Still at step 328, the server 10 randomly generates a time within the randomly generated date to be associated with the initial calendar object. However, as noted above, the generation of a time is optional and may be omitted.

Users would typically have calendar information falling within a range of hours corresponding to a work day, such as 8:00 to 18:00, and the calendar application running on the user device 20 would normally display this range of hours to the user by default, which is determined based on settings of the calendar application (i.e. unless it received an input from the user requesting another range of hours to be displayed).

In the present example embodiment, the server 10 generates the time to be outside of the typical range of hours be displayed to the user by default, for example by generating a time between 00:01 and 03:00. Accordingly, the initial calendar object is less likely to be viewed by the user and modified or deleted, which would alter/delete the initial server token.

In the present example embodiment, the server 10 generates and stores calendar objects in accordance with the IETF's Standard on Internet Calendaring and Scheduling Core Object Specification (iCalendar), as defined for example in the Standard document RFC 5545, and related documents. One of the DTSTAMP field or the DTSTART field of the initial calendar object is set based on the randomly generated date and time.

Server 10 incorporates the initial secure token as content data in the iCalendar object. The initial secure token may be incorporated in any field of content data allowing for alphanumeric or numeric data to be inserted, such as a field of content data normally used to provide a note to the user about the entry. In the present example embodiment, the initial secure token is placed in the COMMENT field of the iCalendar object, but this is non-limiting and a different field may be used instead.

Still at step 328, the server 10 stores the generated initial calendar object on the server 10.

If the initial calendar object does not comprise a version for the initial calendar object (e.g. if the initial calendar object does not comprises a field or a property indicating the version), the server 10 also stores a version in association with the initial calendar object. In the present example embodiment, the server 10 stores the generated iCalendar object in association with at least a CalDAV etag property as a version of the initial calendar object, and a status value indicating that the secure token is valid. However, this is non-limiting and the version may be stored for the initial calendar object in other ways. Similarly, the status for the initial secure token may stored in other ways.

At step 330, the server 10 transmits the initial calendar object comprising the initial secure token to the user device 20.

In the present example embodiment, the server 10 first transmits the etag stored in association with the iCalendar object (i.e. the initial calendar object). The user device 20 receives the etag and determines that the associated iCalendar object is not stored on the user device 20. The user device 20 then requests the iCalendar object from the server 10, in response to which the server 10 sends the iCalendar object generated as the initial calendar object to the user device 20.

At step 332, the server 10 sets the version of the initial calendar object on the server 10 to be older than the version of the initial calendar object provided (at step 330) to the user device 20.

In the present example embodiment, the server 10 sets the etag stored in the server 10 in association with the initial calendar object to be older than the etag sent to the user device 20.

At step 334, the server 10 stores a plurality of further calendar objects, each of which is destined for the user device 20. Each of the further calendar objects is associated with a respective date, and optionally a time, and comprises content data defining calendar information relevant to the user of the user device 20. Additionally, if a further calendar object does not comprise a version for the calendar object (e.g. if the further calendar object does not comprise a field or a property indicating the version of the further calendar object), the server 10 stores a respective version associated with that further calendar object.

In the present example embodiment, each of the plurality of the further calendar objects is generated by server 40 or one of the other user devices 20 operated by the user, and is sent to the server 10 via the network 30. If required, the server 10 generates a respective CalDAV etag property as a version for each further calendar object and stores each pair of further calendar object and etag in association with each other.

At step 336, the user device 20 receives the initial calendar object from the server 10.

At step 338, the user device 20 stores the initial calendar object comprising the initial secure token in the user device 20. In the present example embodiment, the user device 20 stores the iCalendar object generated as the initial calendar object and the etag in association with each other, in the user device 20.

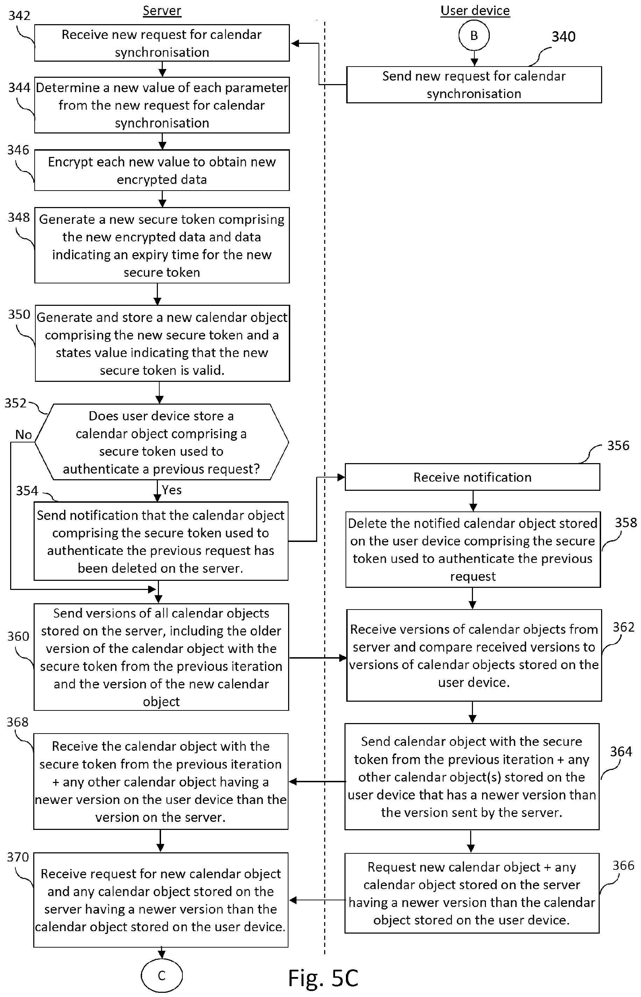

Referring now to Figure 5C, the user device 20, having received and stored the initial calendar object, will at a future time attempt to synchronise the calendar data stored on the user device 20 with the calendar data stored on the server 10.

Therefore, at step 340, the user device 20 sends a new request for calendar synchronisation to the server 10. The user device 20 may use the server information and include the credentials in the new request for calendar synchronisation. In the present example embodiment, this new request is another REPORT request in accordance with the CalDAV protocol. With regard to the timing of step 340 the user device 20 may be configured to synchronise the calendar data with the server 10 periodically (e.g. every 5 minutes, every 15 minutes, every hour) and/or when a predetermined event occurs, such as a connection to the network 30 being re-established following a disconnection.

At step 342, the server 10 receives the new request for calendar synchronisation. With the new request for calendar synchronisation, the user device 20 requests the version numbers of all calendar objects stored on the server 10. The server 10 may reject other types of requests, such as requests for information on the calendar objects other than the version numbers (or in addition to the version numbers) or requests for version numbers of only a portion of the calendar objects stored on the server. In the present example embodiment, the server 10 rejects any requests for calendar synchronisation requesting information other than the version numbers of calendar objects stored on the server and requests for the version number of only a portion of the calendar objects stored on the server, by responding to the request with an HTTP:403 Forbidden response, as explained for example for step 306 above.

At step 344, the server 10 determines a new value of each of the at least one parameter that is characteristic of the user device, as determined at step 308 for the initial synchronisation request. Optionally, the server 10 may also determine a new value of the at least one other parameter characteristic of the new request for calendar synchronisation, such as those optionally determined at step 308. Continuing with the previous example parameters, therefore, in the present example embodiment, the server 10 determines a new value of the IP address of the user device 20 and an IMEI number of the user device.

At step 346, the server 10 encrypts each new value of the at least one parameter to obtain new encrypted data (i.e. the new value(s) of the at least one parameter characteristic to the user device 20, and, if any is/are determined at step 344, the new value(s) of the at least one parameter characteristic of the received synchronisation request). The encryption of each new value is performed in the same way as described above with reference to step 324 for the initial values.

At step 348, the server 10 generates a new secure token comprising the new encrypted data and data indicating an expiry time for the new secure token. The generation of the new secure token is performed in the same way as described above for the initial secure token at step 326. In the present example embodiment, the expiry time for the new secure token is set to 24 hours from generation of the secure token, as with the initial secure token.

At step 350, the server 10 generates and stores a new calendar object comprising the new secure token. In the present example embodiment, the new calendar object is generated in the same way as described above for the initial calendar object at step 328, including the random generation of a new date and a new time to be associated with the new calendar object, in a time range preceding the date of generation of the new calendar object by at least one month. The new date may be the same as the date generated for the initial calendar object or it may be a different date. Similarly, the new time may be the same as the time generated for the initial calendar object or it may be a different time. Using generating different date and/or time for each calendar object comprising a secure token may help further dissimulate the secure tokens from the user or from third parties. The server 10 then stores the generated new calendar object on the server 10.

In the present example embodiment, the server 10 generates the new calendar object in accordance with the iCalendar format. The DTSTAMP or DTSTART field of the new calendar object is set based on the new date and new time that are randomly generated, and the COMMENT field of the new calendar object is set to include the new secure token. The server 10 stores the new iCalendar object in association with an etag (as a version) and a status value indicating that the secure token is valid.

At step 352, the server 10 determines whether the user device 20 stores a calendar object comprising a secure token used to authenticate a previous request for calendar synchronisation (i.e. a used secure token).

If the server 10 determines that there is a used secure token stored on the user device 20, processing proceeds to step 354. Otherwise, the processing in steps 354, 356 and 358 is skipped.

In the present example embodiment, after generating a calendar object comprising a secure token at each of steps 328 and 350, the server 10 stores in association with the calendar object comprising the secure token, a status value indicating that the secure token is valid. As will be explained further below, when a request for calendar synchronisation from the user device 20 is authenticated using the secure token, the server 10 changes the associated status value stored in the server 10 to indicate that the secure token is used. Accordingly, on a subsequent iteration, the server 10 determines that the user device 20 stores a calendar object comprising a secure token used to authenticate a previous request for calendar synchronisation if the server 10 stores a status value indicating that the associated secure token is used.

On the first iteration when step 350 is performed, the user device 20 stores the initial calendar object comprising the initial secure token. However, the initial secure token has not yet been used to authenticate a request. Accordingly, processing proceeds to step 360. On the other hand, when step 350 is performed on the second iteration of the processing steps, the initial secure token will have been authenticated and have a status value indicating it is 'used'. Therefore, the server 10 will determine that the user device 20 does store a calendar object comprising a secure token previously used to authenticate a synchronisation request, and processing will proceed to step 354. Similarly, on the third iteration of the processing steps, the server 10 will determine that the first new secure token generated at step 348 on the second iteration has been 'used', and so on.

When the server 10 determines at step 352 that the user device 20 stores a calendar object comprising a secure token used to authenticate a previous request, this indicates that the calendar object can be deleted, to avoid unnecessary storage of calendar objects with secure tokens on the user device 20. Accordingly, at step 354, the server 10 notifies the user device 20 that the calendar object stored on the server 10 and comprising the secure token used to authenticate a previous request for calendar synchronisation has been deleted.

At step 356, the user device 20 receives the notification that the calendar object stored on the server 10 is deleted.

At step 358, the user device 20 deletes the notified calendar object stored on the user device 20 that was identified in the notification received at step 356.

At step 360, the server 10 sends a version of all calendar objects stored on the server 10, including the older version of the calendar object with the secure token from the previous iteration and the version of the new calendar generated on the present iteration object comprising the new secure token. The calendar object with the secure token from the previous iteration is, in the first iteration of the processing steps shown in Figures 5C-5D, the initial calendar object whose version was set to be older at step 322, and in subsequent iterations of the process, it is a new calendar object generated at step 350 of the previous iteration (i.e. on the second iteration, this is the first new calendar object generated at step 350, on the third iteration, this is the second new calendar object generated at step 350, and so on). For example, the server 10 may provide associations between information identifying a calendar object and a respective version of that calendar object, which may be formatted as a list. Alternatively, the server 10 may use a predetermined ordering of the calendar objects known to the user device 20.

In the present example embodiment, the server 10 sends the CalDAV etag property of each calendar object stored on the server 10, including the older etag of the calendar object with the secure token from the previous iteration.

Although steps 354 and 360 are depicted as separate steps for a clearer description of each step, the transmission of the notification at step 354 and the version of all calendar objects at step 360 may be as a single transmission.

At step 362, the user device 20 receives the versions of the calendar objects from the server 10 and compares each version of a calendar object received from the server 10 to the version of the corresponding calendar object stored on the user device 20. The user device may identify, for each revised version, a corresponding calendar object stored on the user device 20 by using information identifying the calendar object in the version, information sent by the server 10 together with the versions, or using the predetermined ordering. The user device 20 can then compare the version sent by the server 10 to the version of the calendar object stored on the user device 20.

In the present example embodiment, the user device 20 compares the etag associated with an iCalendar object stored in the user device 20 and the corresponding etag received from the server 10 at step 362. Based on the comparison, the user device 20 determines which of the etags received from the server 10 at step 362 is older than the etag stored in the user device 20.

When comparing the version of the calendar object with the secure token from the previous iteration received from the server 10 and the version of the calendar object with the secure token from the previous iteration stored on the user device 20, the user device 20 determines that the version of the compared calendar object stored on the user device 20 is newer. In the present exemplary embodiment, the user device 20 determines that the etag stored on the user device 20 in association with the compared calendar object is newer than the etag received from the server 10.

Based on the comparison, the user device 20 may also determine that one or more other calendar objects stored on the user device 20 has/have a newer version than the corresponding calendar object stored on the server 10 (for example calendar objects on the user device 20 that have been amended by the user changing an entry in the calendar on the user device 20).

The user device 20 also determines, based on the comparison, that it does not store the new calendar object comprising the new secure token generated at step 350 on the present iteration. Additionally, the user device 20 may determine that one or more calendar objects stored on the server 10 (such as the further calendar objects stored at step 334 that were, for example, generated by server 40 or another user device 20 and sent to server 10) have a newer version than the calendar object stored on the user device 20.

At step 364, the user device 20 sends the calendar object with the secure token from the previous iteration stored on the user device 20 to the server 10, along with any other calendar object stored on the user device 20 having a version that is newer on the user device 20 than the version received at step 362 from the server 10.

At step 366, the user device 20 sends a request for the new calendar object comprising the new secure token from the server 10 and any other calendar object stored on the server 10 that the user device 20 determined in step 362 to have a newer version than the calendar object stored on the user device 20.

In the present example embodiment, the user device 20 sends one or more etags, one of which is associated with the new iCalendar object comprising the new secure token, and each of the others (if any) is associated with an iCalendar object on the server 10 that is newer than the corresponding iCalendar object stored on the user device.

Although steps 364 and 366 are depicted as separate steps for a clearer description of each step, the transmission at step 364 of the calendar object with the secure token from the previous iteration (and any other calendar object(s) stored on the user device 20 that has a newer version than the version notified by the server 10) and the request at step 366 for the new calendar object (and any other calendar object stored on the server 10 having a newer version than the calendar object stored on the user device) may be performed as a single transmission.

At step 368, the server 10 receives the calendar object with the secure token from the previous iteration, and, if sent, any other calendar object(s) stored on the user device 20 that has a newer version than the version notified by the server 10.

At step 370, the server 10 receives the request for the new calendar object and for any other calendar object stored on the server 10 and determined to have a newer version than the calendar object stored on the user device 20.

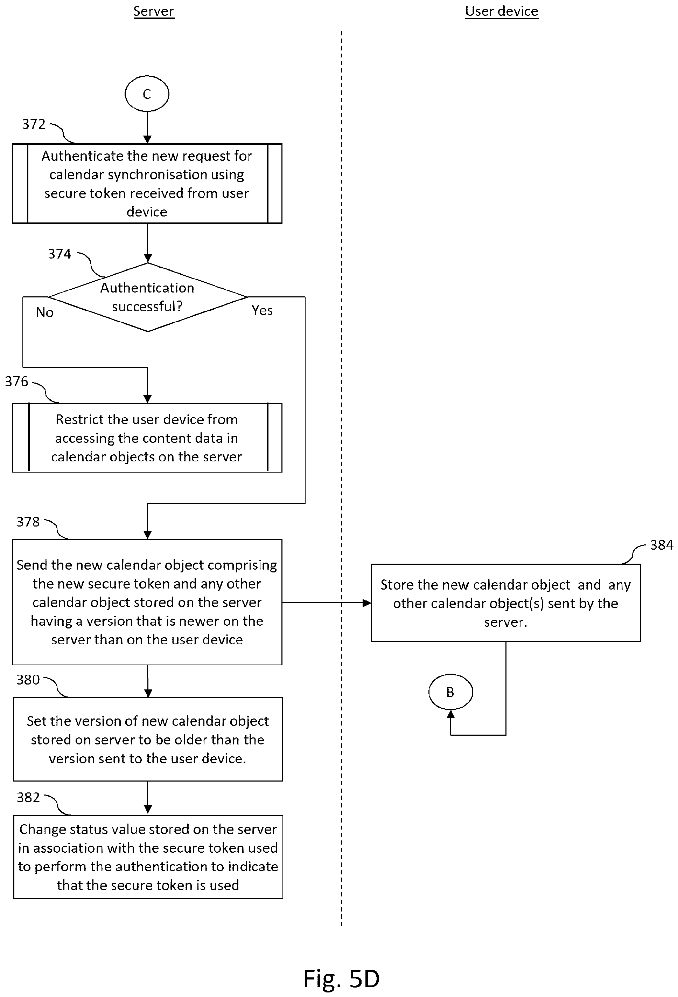

Referring now to Figure 5D, at step 372, the server 10 authenticates the new request for calendar synchronisation (received at step 342) by comparing the secure token from the calendar object received from the user device 20 (at step 368) and the secure token from the corresponding calendar object stored on the server 10. On the first iteration of the processing steps, therefore, the server 10 compares the initial secure token from the initial calendar object received from the user device at step 368 with the initial secure token from the initial calendar object stored on the server 10 at step 328. On the second iteration of the processing steps, the sever compares the first new token from the first new calendar object received from the user device 20 at step 368 with the first new secure token from the first new calendar object stored on the server 10 at step 350, and so on.

It should be noted that, the calendar object comprising a secure token may have been deleted on the user device 20, or the secure token may have been deleted from the calendar object on the user device 20. In that case, the server 10 does not receive the calendar object and/or the secure token at step 368. In that case, the server 10 will determine at step 372 and 374 that the authentication of the request is unsuccessful.

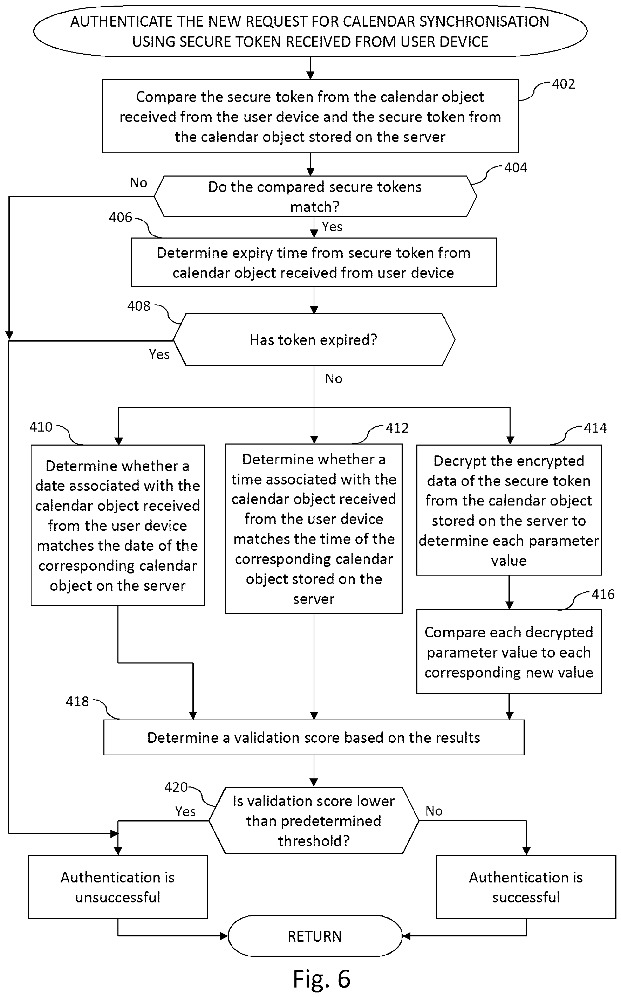

Figure 6 shows the processing operations performed by the server 10 at step 372 to authenticate the request for calendar synchronisation in the present example embodiment.

Referring to Figure 6, at step 402, the server 10 compares the secure token from the calendar object received from the user device 20 and the secure token from the corresponding calendar object stored on the server 10.

By way of non-limiting example, the server 10 may perform a character-by-character comparison of one or more of the characters of the secure tokens, or it may apply the same processing, such as a hash function, to both secure tokens and compare the result of the processing. The comparison may be performed on the secure token as received from the user device 20 or the server 10 may decrypt the secure token received from the user device 20 and decrypt the secure token stored on the server 10 before comparing the decrypted secure tokens.

At step 404, the server 10 determines whether the result of the comparison performed at step 402 indicates the secure tokens match each other. If the secure tokens match, the server 10 proceeds to step 406. Otherwise, the authentication of the request is deemed to be unsuccessful.

At step 406, the server 10 determines an expiry time of the secure token from the calendar object received from the user device, based on the data indicating the expiry time comprised in the secure token. In case the data in the secure token indicating the expiry time is encrypted, the server may decrypt at least a part of the secure token indicating the expiry time to determine the expiry of the secure token.

At step 408 the server 10 determines whether the secure token has expired. By way of non-limited example, the server 10 may determine that the secure token has expired if a current time is after the expiry time of the secure token, or if a time at which the request was received is after the expiry time of the secure token. However, these examples are not limiting and any other way of determining whether the secure token has expired can be used.

If the token has expired (Step 408: YES), the secure token is considered to no longer be valid. Therefore, the authentication of the request is deemed to be unsuccessful.

On the other hand, if the token has not expired (Step 408: NO), processing proceeds to steps 410, 412 and 414. Steps 410, 412 and 414 can be performed in parallel or sequentially in any order.

At step 410, the server 10 determines whether a date associated with the calendar object received from the user device 20 matches the date of the corresponding calendar object stored on the server 10.

If the calendar object received from the user device 20 is associated with a different date than the date of the corresponding calendar object stored on the server, this may indicate that the calendar object was modified on the user device 20, such as by a user manipulation of the calendar object through the calendar application user interface, causing the date associated with the calendar object to be changed. In this case, the server 10 can determine that the secure token has a higher risk of having been accessed or tampered with, and that the request is less likely to be from an authentic user device 20.

In the present example embodiment, the determination at step 410 is a binary match/no match decision. If the compared dates match each other, the server 10 assigns a first predetermined score (e.g. a value of 10) to the result of the comparison. On the other hand, if the compared dates do not match each other, the server 10 assigns a second predetermined score (e.g. a value of 0) to the result of the comparison. However, this example is non-limiting and scores can be assigned in other ways.

At step 412, the server 10 determines whether the calendar object received from the user device 20 is associated with the time that is associated with the corresponding calendar object stored on the server 10.

Similar to the process explained above for step 410 in connection with the date associated with the calendar object, the server 10 determines the time associated with the calendar object received from the user device 20, and the time associated with the corresponding calendar object stored on the server 10, and then compares the times. The server 10 assigns one of a second plurality of predetermined scores based on whether the compared times match each other. The second plurality of predetermined scores indicates how likely the request is to be from an authorised user device 20 (i.e. an authentic request), each of the second plurality of predetermined scores providing an indication that the request is more or less likely to be from an authorised user device 20 relatively to another one of the second plurality of predetermined scores.

For example, the second plurality of predetermined scores may comprise two scores, and the server 10 may determine a binary match/no match decision at step 412, and then allocate a first of the two scores (e.g. 5) to the result if the times match each other, and the second of the two scores (e.g. 1) to the result if the times do not match each other. These examples of scores are non-limiting and different scores may be assigned instead. For example, the scores assigned to the comparison of the times at step 412 may be the same as the scores assigned to the comparison of the dates at step 410.

At step 414, the server 10 decrypts the encrypted data of the secure token in the corresponding calendar object stored on the server 10 to determine a value of each of the at least one parameter that is characteristic of the user device 20 and that were used to generate the encrypted data. Additionally, the server 10 may determine the value(s) of the at least one parameter characteristic of the request for synchronisation, if these were also used to generate the encrypted data.

To decrypt the encrypted data, the server 10 uses a decryption key associated with the encryption key used to encrypt the data when generating the secure token.

At step 416, the server 10 compares each value obtained at step 414 to each corresponding new value determined from the request for calendar synchronisation being authenticated (i.e. the values of each parameter determined at step 344).

In the present example embodiment, the server 10 determines values of the IP address of the user device 20 and an IMEI number of the user device. Therefore, in the present example embodiment, the server 10 compares the value of the IP address of the user device 20 determined at step 414 to the value of the IP address of the user device 20 determined at step 344 when the current request for calendar synchronisation was received, to determine if the two values match. The value of the IP address determined at step 414 is a value that was obtained from a previous request for synchronisation in a preceding iteration and used to generate the current secure token being authenticated. Therefore, if the values match, this indicates the previous request for synchronisation and the current request for synchronisation were made from the same IP address.

Additionally, in the present example embodiment, the server 10 compares the value of the IMEI number determined at step 414 to the value of the IMEI number determined at step 344 when the current request for calendar synchronisation was received, to determine if the two numbers match.

The server 10 assigns a predetermined score to the result of each comparison based on whether the compared values match, the predetermined score assigned to compared values that match indicating that the request for calendar synchronisation is more likely to have come from an authorised user device 20 than the predetermined score assigned to compared values that do not match.

Each parameter may have a different impact on whether the request is authenticated, based on whether the compared values of that parameter match.

For example, an authentication of the request for calendar synchronisation may require the compared values to match for a first parameter that uniquely identifies the user device 20 or is permanently assigned to the user device 20, such as the IMEI number, the device UUID, the MAC address, the serial number of the device, etc. In this case, if the compared values for any of these parameters dos not match, the server 10 may assign a predetermined score to the result of that comparison which causes the overall authentication of the request for calendar synchronisation to be unsuccessful.

On the other hand, a second parameter may be considered likely to change between requests for calendar synchronisation such as the IP address of the user device 20, or the geographic location of the user device 20. When the compared values of the second parameter do not match, the predetermined score assigned to the result of the comparison would not necessarily cause the authentication of the request for calendar synchronisation to be unsuccessful.

In the present example embodiment, the server 10 assigns a score of 15 if the compared IP addresses match, and a score of 0 otherwise. The server 10 assigns a score of 50 if the compared IMEI numbers match and a score of 0 otherwise. However, these scores are non-limiting and different scores may be assigned instead.

At step 418, the server 10 determines a validation score based on the result of comparing the dates at step 410, the result of comparing the times at step 412, and the result of comparing the value(s) at step 416.

By way of non-limiting example, the server 10 can determine the validation score based on a combination of the scores assigned to the respective results of steps 410, 412 and 416.

In the present example embodiment, the server 10 sums the scores assigned to the respective results of steps 410, 412, 416, although the scores could be combined in other ways.

By way on non-limiting example, assuming the dates and times of the calendar object received from the user device 20 match those of the corresponding calendar object stored on the server 10, the comparisons at steps 410 and 412, are each assigned a score of 10. Assuming additionally that the value of the IMEI number determined for the request being authenticated matches the decrypted value of the IMEI from the calendar object stored on the server 10, but that the value of the IP address determined for the request being authenticated does not match the decrypted value of the IP address from the calendar object stored on the server 10, the comparison of the IMEI numbers at step 416 is assigned a score of 50 and the comparison of the IP addresses at step 416 is assigned a value of 0.

Accordingly, in this non-limiting example, the server 10 would sum the following:

| | |
|---|---|
| the score assigned to the result of step 410: | 10, |
| the score assigned to the result of step 412: | 10, and |
| the scores assigned to the result of step 416: | 50 (0 + 50), |
| to determine the overall validation score: | 70. |

In the above example, the server 10 determine the valuation score as a sum of the values assigned to the results of steps 410, 412 and 416. However, this is not limiting and any combination of the values can be used to determine the valuation score, such as a weighted sum of the values, an average (arithmetic mean, weighted average, etc.), a combination including a product of two or more of the values, a ratio of two or more of the values. For example, the server 10 may determine the valuation score as:

$$V = (I_{dates} + I_{times} + I_{IPaddress}) \times I_{IMEInumber}$$

where V is the validation score, $I_{dates}$ is the value assigned to the result of comparing dates associated with calendar objects (at step 410), $I_{times}$ is the value assigned to the result of comparing times associated with calendar objects (at step 412), $I_{IPaddress}$ is the value assigned to the result of comparing IP addresses of the user device 20 determined from requests (at step 416), and $I_{IMEInumber}$ is the value assigned to the result of comparing IMEI numbers of the user device 20 determined from requests (at step 416).

At step 420, the server 10 determines whether the validation score is lower than a predetermined threshold, which represents a limit between scores indicating that the request is likely to be from an authorised device and scores indicating that the request is not sufficiently likely to be from an authorised device.

If the determined validation score is lower than the predetermined threshold (YES at step 420), the authentication is unsuccessful.

On the other hand, if the determined validation score is equal or higher than the predetermined threshold (NO at step 420), the authentication of the request is successful.

By way of non-limiting example, in the present example embodiment, the predetermined threshold may be defined as 70, namely that the validation score needs to be 70 or more for the request to be considered authentic (and the authentication of the request to be successful).

In the example provided above, as the date and time of the calendar object received from the user device 20 match those of the corresponding calendar object stored on the server 10, and the request was made from a device having the same IMEI number as the request used to generate the secure token being authenticated, the validation score is determined to be 70, resulting in the authentication of the request being successful.

On the other hand, assuming the comparisons of steps 410 and 412 remain unchanged, but that at step 416, the values of the IP addresses are determined to match whereas the values of the IMEI numbers are determined not to match, the validation score would be determined to be: 10 (from step 410) + 10 (from step 412) + 15 (from step 416) = 45. This would result in the authentication of the request being unsuccessful, as a match of the IMEI number is considered to be of higher importance than a match of the IP values. By assigning individual scores to the outcomes of each comparison, and combining these scores into an overall validation score, the server 10 can assign more-or less importance to each comparison relative to other comparisons.

Although a non-limiting example has been described above where the validation score is determined such that a higher validation score indicates that the request is more likely to be from an authorised user device and the predetermined threshold at step 420 was defined accordingly as a lower limit for the validation score, this is not limiting. In another non-limiting example, the validation score may be determined such that a lower validation score indicates that the request is more likely to be from an authorised user device (i.e. less likely to be fraudulent), and the predetermined threshold may be defined as an upper limit such that the validation score needs to be lower than or equal to the predetermined threshold for the server 10 to determine that the authentication of the request is successful.

Although the range of possible validation scores has been described in the non-limiting example above as being between 0 and 100, this is not limiting, and any suitable range of values, of natural (e.g. 1 to 5) or decimal numbers (e.g. 0.1 to 4.9), or any other scoring scheme may be used.

Referring again to Figure 5D, at step 374, the server 10 determines whether the authentication at step 372 was successful.

If the authentication is determined at step 374 to be successful, processing proceeds to step 378, at which the server 10 provides to the user device 20 the new calendar object generated at step 350 comprising the new secure token and any other calendar object stored on the server 10 having a version that is newer on the server 10 than on the user device 20 (i.e. the calendar objects identified in the request received at step 370).

In the present example embodiment, the server 10 determines which of the iCalendar objects to send to the user device 20 using the etag(s) it received from the user device 20 at step 370.

At step 380, the server 10 sets the version of the new calendar object stored on the server 10 at step 350 to be older than the version sent to the user device 20 (at step 378). The version of the new calendar object can be set in the same way as described above for the initial calendar object at step 332.

In the present example embodiment, the server 10 changes the etag stored on the server 10 in association with the new calendar object to an older value than the etag sent to the user device 20.

At step 382, the server 10 changes the status value stored in association with the iCalendar object comprising the secure token used to perform the authentication at step 372, to indicate that the secure token is used.

At step 384, the user device 20 receives and stores the new calendar object (comprising the new secure token) and any other calendar object(s) sent by the server 10 at step 378.

Accordingly after step 384, the calendar objects stored on the user device 20 are synchronised with those on the server 10, except that the calendar object having the latest secure token has a newer version on the user device 20 than on the server 10.

Following step 384, the process returns to step 340, at which the user device 20 sends a new request for calendar synchronisation, and steps 340 to 384 are repeated.

The server 10 therefore receives a further request for calendar synchronisation from the user device 20 each time step 340 is repeated. For each new request for calendar synchronisation from the user device 20, the server 10 generates a new calendar object comprising a new secure token (step 350), and, if the new request is authenticated (steps 372 and 374), the new calendar object is provided to the user device 20 (step 378).

Referring again to step 374, if the authentication is determined to be unsuccessful, at step 376, the server 10 restricts the user device 20 from accessing the content data in calendar objects stored on the server 10.

Server 10 may perform processing at step 376 to restrict the user device 20 from accessing the content data in calendar objects stored on the server 10 in different ways.

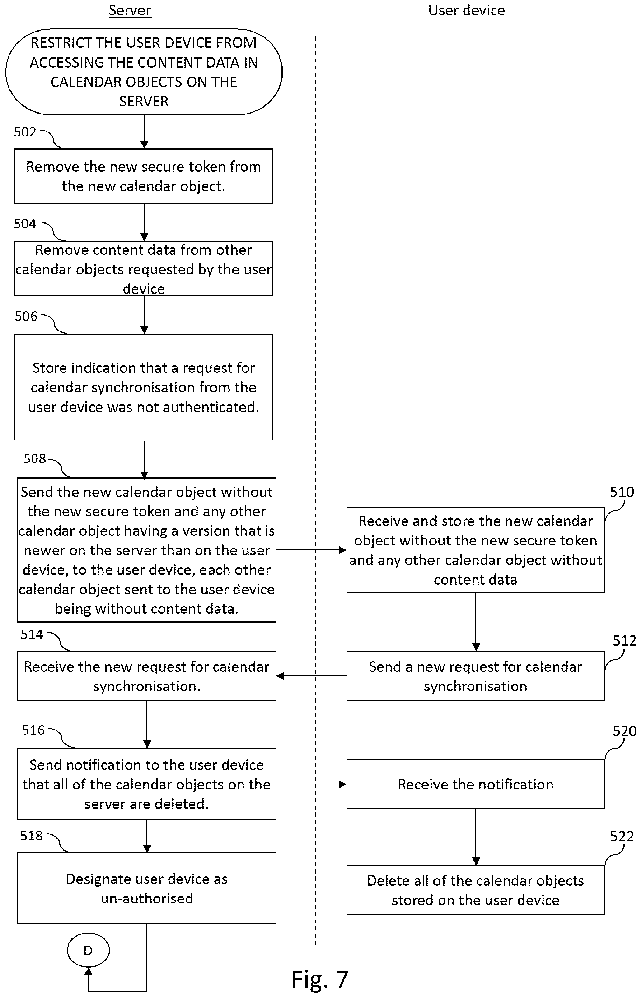

Three different examples of the processing that can be performed by server 10 at step 376 will now be described with reference to Figure 7, Figures 8A and 8B, and Figure 10, respectively. However, these examples are non-limiting and different processing could be performed by server 10 instead.

Figure 7 shows a first example of processing operations performed by the server 10 at step 376 for restricting the user device 20 from accessing content data in calendar objects in the server 10.

At step 502, the server 10 removes the new secure token from the new calendar object previously generated at step 350 on the present iteration. In the present example embodiment, the server 10 replaces the value of the field containing the new secure token, i.e. the COMMENT field of the iCalendar object, with an empty character string.

At step 504, the server 10 removes the content data from the other calendar objects requested by the user device 20 at step 366 that are stored on the server 10. In the present example embodiment, the server 10 removes all calendar information from the calendar object by removing fields of the iCalendar objects such as the SUMMARY, DESCRIPTION, GEO, LOCATION, ATTENDEE, DTSTART, DURATION, etc. (or, if the field cannot be removed, by replacing the value of the field with an empty character string or the like).

At step 506, the server 10 stores an indication that a request for calendar synchronisation from the user device 20 has not been authenticated (i.e. a failed authentication). For example, the server 10 may have a list of identifiers for user devices (i.e. information identifying the user device such as a device ID (Device UUID/GUID etc.), an IMEI number, a MAC address, a serial number of the user device, etc. The server 10 may store an indication at step 506 that the user device 20 has not been authenticated in association with one or more of the identifiers for the user device 20.

In the present example embodiment, the server 10 replaces the value of the device status value that is stored on the server 10 for the user device 20, with a value indicating that a request for calendar synchronisation from the user device 20 was not authenticated.

As will be explained below, the indication stored at step 506 will be used by server 10 at step 516 to identify the user device 20 as a user device that is not authenticated.

At step 508, the server 10 sends to the user device 20 the calendar object(s) that were requested by the user device 20 at step 366, namely the new calendar object (without the new secure token) and any other calendar object having a version that is newer on the server 10 than on the user device 20, each of the other calendar objects sent to the user device 20 having its content data removed at step 504, prior to the transmission to the user device 20.

Accordingly, the user device 20 is restricted from accessing the content data in these calendar objects.

At step 510, the user device 20 receives the new calendar object without the new secure token and any other calendar object without content data sent by the server 10, and stores the received calendar object(s).

At a later time, the user device 20 attempts to re-synchronise calendar data with the server 10, and at step 512, the user device 20 sends a new request for calendar synchronisation to the server 10. In the present example embodiment, the request is a CalDAV REPORT request.

At step 514, the server 10 receives the new request for calendar synchronisation from the user device 20.

At step 516, the server 10 determines, using the indication stored at step 506, that the previous request for calendar synchronisation sent by the user device 20 was not authenticated, and the server 10 sends a notification to the user device 20 that all of the calendar objects on the server 10 have been deleted.

In the present example embodiment, the server 10 obtains a value of each of the at least one parameter that is characteristic of the user device 20 from the new request received at step 514, and determines whether the server 10 stores a device status value in association with values corresponding to the value(s) obtained from the new request that indicates the user device is not authenticated.

In the present example embodiment, the server 10 responds to the CalDAV REPORT request from the user device 20 with a response having no identifier of iCalendar objects (e.g. no etag), which indicates to the user device 20 that all iCalendar objects on the server have been deleted.

At step 518, the server 10 stores data designating the user device 20 as un-authorised, and will require the user device 20 to be re-authorised by the user before providing calendar data to the user device 20. The processing on the server 10 returns to step 310.

In the present example embodiment, at step 518 the server 10 replaces the device status value that is stored on the server 10 for the user device 20 with a value indicating that the user device 20 is not authorised.

In the meantime, at step 520, the user device 20 receives the notification that all of the calendar objects on the server 10 have been deleted.

To avoid inconsistency in the calendar data stored on the server 10 and the user device 20, the version on the server 10 is considered to be the "truth", and the calendar data stored on the user device 20 is updated to match the version on the server 10.

Accordingly, at step 522, the user device 20 deletes all of the calendar objects stored on the user device 20, to match the calendar data that is on the server 10.

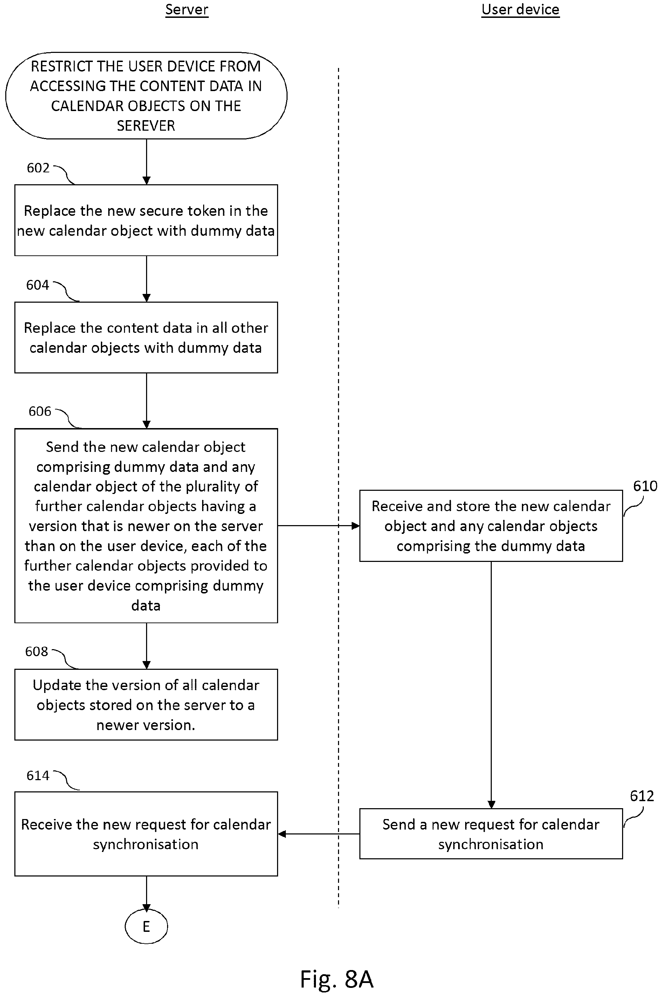

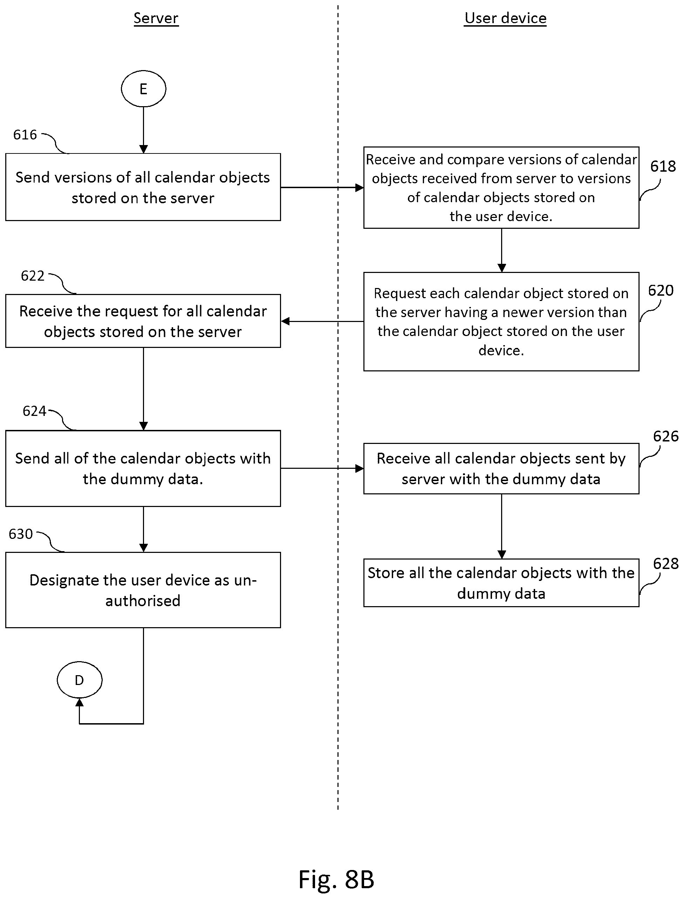

Figures 8A and 8B show a second example of processing operations performed by the server 10 for restricting the user device 20 from accessing content data at step 376.

At step 602, the server 10 replaces the new secure token in the new calendar object stored on the server 10 (i.e. the new calendar object generated and stored at step 350 on the present iteration of processing steps) with dummy data. The dummy data may be any data other than the new secure token.

In the present example embodiment, the server 10 removes the new secure token from the COMMENT field of the iCalendar object and replaces it with text.

At step 604, the server 10 replaces the content data in all other calendar objects stored on the server 10 with dummy data. The dummy data for each calendar object may be any data that does not provide an indication of the true content data previously stored in the calendar object.

At step 606, the server 10 sends to the user device 20 the calendar object(s) that were requested by the user device 20 at step 366, namely the new calendar object (having the new secure token replaced with dummy data) and any other calendar object having a version that is newer on the server 10 than on the user device 20, each of the other calendar objects sent to the user device 20 having its content data replaced at step 604 with dummy data, prior to the transmission to the user device 20.

At step 608, the server 10 sets the version of each calendar object stored on the server 10 to be a newer version.

In the present example embodiment, at step 608, the server 10 changes the etag stored in association with each iCalendar object to be a newer value than the etag previously sent to the user device 20.

At step 610, the user device 20 receives and stores the new calendar object comprising dummy data and any other calendar object sent by the server also comprising dummy data. The user device 20 also stores the version of each received calendar object, which may be included in the calendar object or stored in association with the corresponding calendar object.

In the present example embodiment, the user device 20 receives and stores the etag in association with the corresponding iCalendar object comprising dummy data received from the server 10.

At a later time, the user device 20 attempts to re-synchronise calendar data with the server 10, and at step 612, the user device 20 sends a new request for calendar synchronisation to the server 10.

In the present example embodiment, the new request for calendar synchronisation is a CalDAV REPORT request.

At step 614, the server 10 receives the new request for calendar synchronisation from the user device 20.

Referring now to Figure 8B, at step 616, the server 10 sends the version of all calendar objects stored on the server.

In the present example embodiment, at the step 616, the server 10 sends the etag stored in association with each iCalendar object stored on the server.

At step 618, the user device 20 receives and compares the versions of calendar objects received from the server 10 to the versions of the calendar objects stored on the user device 20.

In the present example embodiment, at step 618, the user device 20 compares the etags received from the server 10 with the etags stored on the user device 20 in association with the iCalendar objects.

Based on the comparisons at step 618, the user device determines which of the calendar objects stored on the server 10 has a newer version than the calendar object stored on the user device 20.

At step 620, the user device requests each calendar object stored on the server having a newer version than the calendar object stored on the user device 20. Effectively, as the server 10 updated the version of all calendar objects stored on the server (at step 608), the user device 20 determines that every calendar object stored on the server 10 has a newer version than the calendar object stored on the user device 20. Accordingly, the user device 20 requests all calendar objects from the server 10.

At step 622, the server 10 receives the request from the user device 20 for all calendar objects stored on the server 10.

At step 624, the server 10 sends all of the calendar objects with the dummy data to the user device 20.

At step 626, the user device 20 receives all calendar objects sent by the server 10 with the dummy data.

At step 628, the user device 20 stores all of the calendar objects with the dummy data. Accordingly, any calendar object previously stored on the user device 20 is replaced with a calendar object with dummy data.

At step 630, the server 10 stores data designating the user device 20 as un-authorised, and will require the user device 20 to be re-authorised by the user before providing calendar data to the user device 20. The processing on the server 10 returns to step 308.

In the present example embodiment, at step 630 the server 10 replaces the device status value that is stored on the server 10 for the user device 20, with a value indicating that the user device 20 is not authorised.

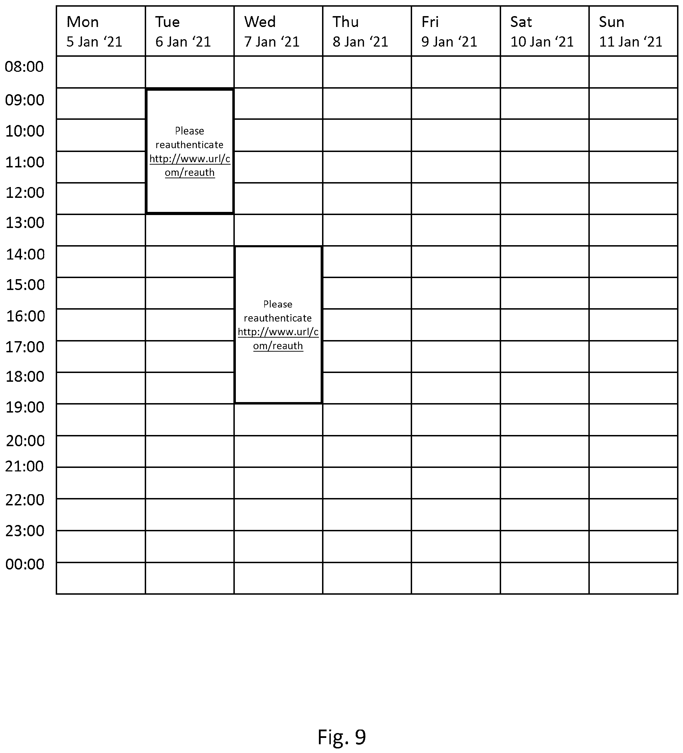

In the second example above, the dummy data added by the sever 10 in one or more calendar objects may be dummy data which notifies the user of an issue in the calendar synchronisation. In addition, the dummy data in at least one calendar object may include a URL link allowing the user to reauthenticate with the server, which the user can access by interacting with (e.g. clicking or tapping on) the display of the corresponding calendar information, for example as illustrated in the example display of calendar information in Figure 9.

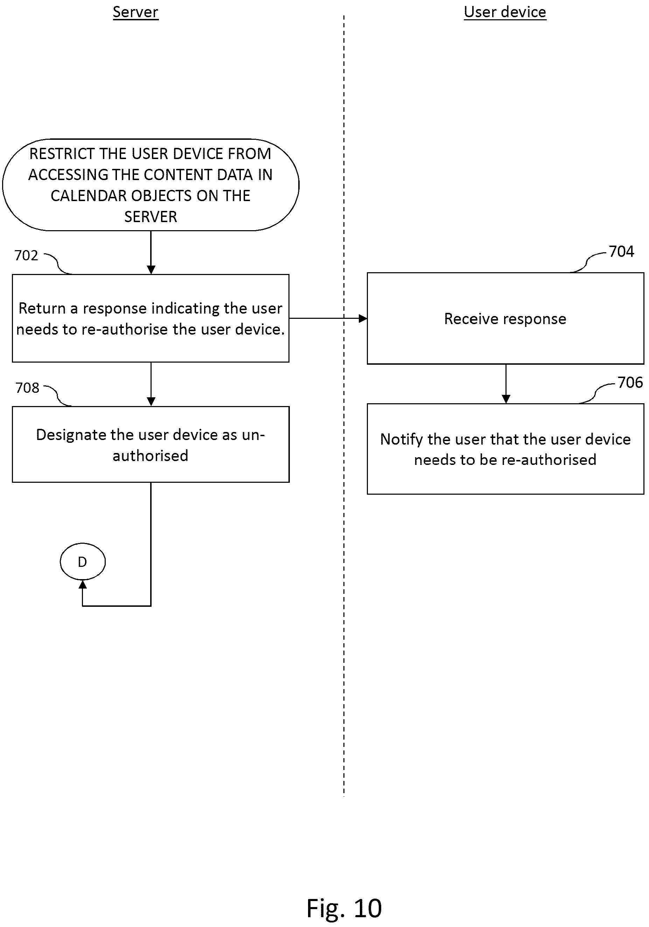

Figure 10 shows a third example of processing operations performed by the server 10 for restricting the user device 20 from accessing content data in calendar objects in the server 10 at step 376.

At step 702, the server 10 returns a response to the user device 20 indicating that the user needs to re-authorise the user device 20.

For example, the server 10 may return a response including a notification to be displayed to the user via the user interface, or it may return a response causing the user device 20 to determine that it no longer has access to the calendar data, triggering the user device to request the user to verify or re-authenticate with the server.

In the present example embodiment, the server 10 returns an HTTP 403: Forbidden response.

At step 704, the user device 20 receives the response from the server 10.

At step 706, the user device 20 notifies the user that the user device 20 needs to be re-authorised in order to obtain the calendar data. In the present example embodiment, the user device 20 notifies the user by displaying the notification on a display of the user device 20, or by sending a message to the user via text and/or e-mail, as described above for step 310.

In the meantime, at step 708, the server 10 stores data designating the user device 20 as un-authorised, and will require the user device 20 to be re-authorised by the user before providing calendar data to the user device 20. The processing on the server 10 returns to step 308.

In the present example embodiment, at step 708, the server 10 replaces the device status value that is stored on the server 10 for the user device 20, with a value indicating that the user device 20 is not authorised.

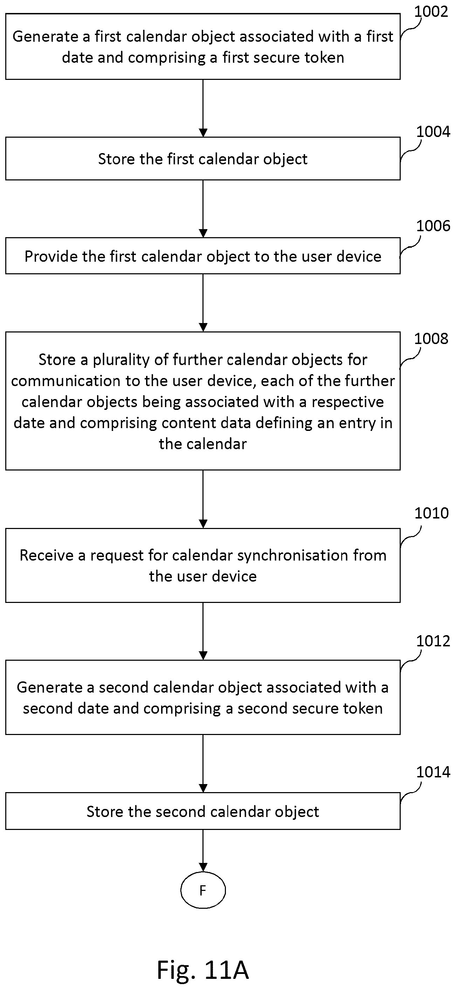

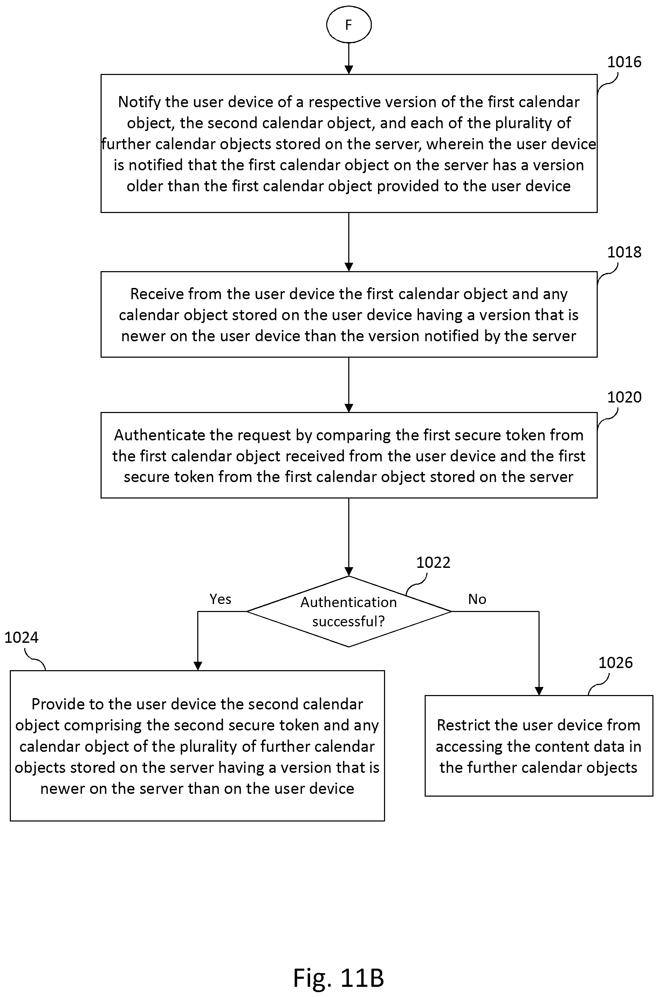

In summary, it will be appreciated from the description above that certain example embodiments perform processing operations to effect a method as shown in Figures 11A and 11B that is performed by a server for generating secure calendar data for a user device.

Referring to Figure 11A, at step 1002, the server generates a first calendar object associated with a first date and comprising a first secure token.

At step 1004, the first calendar object is stored on the server.

At step 1006, the server provides the first calendar object to the user device.

At step 1008, a plurality of further calendar objects for communication to the user device are stored on the server, each of the further calendar objects being associated with a respective date and comprising content data defining an entry in the calendar.

At step 1010, the server receives a request for calendar synchronisation from the user device.

At step 1012, the server generates a second calendar object associated with a second date and comprising a second secure token.

At step 1014, the second calendar object is stored on the server.

Referring now to Figure 11B, at step 1016, the server notifies the user device of a respective version of the first calendar object, the second calendar object, and each of the plurality of further calendar objects stored on the server. The user device is notified that the first calendar object on the server has a version older than the first calendar object provided to the user device.

At step 1018, the server receives from the user device the first calendar object and any calendar object stored on the user device having a version that is newer on the user device than the version notified by the server.

At step 1020, the server authenticates the request by comparing the first secure token from the first calendar object received from the user device and the first secure token from the first calendar object stored on the server.

Upon successful authentication of the request, at step 1024, the server provides to the user device the second calendar object comprising the second secure token and any calendar object of the plurality of further calendar objects stored on the server having a version that is newer on the server than on the user device.

Upon unsuccessful authentication of the request, at step 1026, the server restricts user device from accessing the content data in the further calendar objects.

Here, it would be apparent to the skilled reader that the use of the term "second request" above is merely used to indicate that it is subsequent to the "first request" above, but the first and second requests are not necessarily the actual first and second requests (they could be later requests) or that the requests are consecutive requests.

[Variations and Modifications]

Many modifications and variations can be made to the example embodiments described above.

For example, although the above example embodiments describe the processing of the server 10 and the user device 20 based on the iCalendar and CalDAV protocols, example emobdiments are not limited to a particular communication protocol or data format, and the server 10 and user device 20 could use any other known protocol or data format, including SyncML, Web Calendar Access Protocol, Webcal, ActiveSync Exchange standardise (and any combinations thereof), which allows the server 10 to insert a secure token into a calendar object, send the calendar object with the secure token to the user device, and trigger the user device into sending the version of the calendar object comprising the secure token stored on the user device back to the server.

In the above example embodiments, the server 10 manages a database storing credentials generated for each user in association with at least one of an email address of the user and a mobile telephone number of the user. However, the database may alternatively store the credentials in association with an identifier of the user. Another entity, such as another server, may manage another database storing the identifier of the user in association with information for contacting the user, such as the email address of the user, the mobile telephone number etc. The separation of the credentials and the information used for communicating with the user may improve the security of the information as it would require access to two different databases in order to determine the association of the credentials with the information used for communicating with the user.

In the above example embodiments, at step 310, the server 10 transmits a message to the user to request the user to authorise the user device 20, for example via email and/or text message. Alternatively, the server 10 may send an indication to a different server via a preestablished secure channel (such as via the direct secure connection between servers 10 and 40 shown in Figure 1) that a user device that is not yet authorised requested a synchronisation of calendar data. The indication may include information identifying the user device having sent the request for calendar synchronisation (determined from the request) and/or information identifying the user (determined from the credentials and/or server information such as the URL of the calendar data to which the user device requested access). The different server may hold information for communicating with the user via a secure channel, and may transmit the message requesting the user to authorise the user device.

In the above example embodiments, at step 334 the server 10 receives the further calendar objects (comprising calendar data for a user) and temporarily stores the further calendar objects, e.g. in a temporary storage, until they are provided to the user device 20 (in response to a request for calendar synchronisation that is authenticated), or they are deleted on the server 10. Alternatively, the server 10 may store the further calendar objects permanently, e.g. in a permanent storage. In that case, when restricting the user device 20 from accessing the content data, the server 10 may store a copy of the calendar objects in a separate storage before deleting any calendar objects, or removing the content data of the calendar objects, and/or replacing the content data of the calendar objects with dummy data. Accordingly, any permanent loss of calendar data may be avoided, and the calendar objects with the correct content data may be provided to the user device once it is re-authorised. Alternatively, the server 10 may store in a temporary storage a separate copy of the calendar objects for each user. In that case, the server 10 may remove or replace the content data or delete the further calendar objects from the copy stored in the temporary storage for a user device when a synchronisation request from that user device is not authenticated.

In the above example embodiments, the server 10 may store one or more further calendar objects comprising content data for the user before step 330. Accordingly, at step 330, the server 10 may send these one or more further calendar objects to the user device 20 together with the initial calendar object.

Although the above example embodiments describe the processing operations in a specific order, this is not limiting and changes can be made to the order.

For example, in the above example embodiments, step 308 is performed before step 310. Accordingly, the request sent by the server at step 310 to authorise the user device 20 may include one or more of the parameters (or parts of these parameters) that are obtained from the request at step 308, to assist the user verify to that the user device 20 making the request is to be authorised. However, in a variation of the above example embodiments, step 308 may be performed after step 310, for example after step 316. In that case, the server 10 would only determines value(s) of the parameter(s) for a user device that has been authorised, thereby reducing processing performed by the server 10 and/or data stored by the server 10.

As another example, step 308; steps 308 and 324; steps 308, 324 and 326; or steps 308, 324, 326 and 328 can be performed before step 306. For example, the server 10 may determine the value of each of the at least one parameter that is characteristic of the user device 20 from inputs of the user during the registration process, or from the user device 20 itself if it is used to perform the registration process. The server 10 may encrypt these values to obtain the encrypted data to be comprised in the initial secure token.

Similarly, step 344; steps 344 and 346; steps 344, 346 and 348; or steps 344, 346, 348 and 350 can be performed before step 342. For example, the server 10 could use the same encrypted data obtained during the registration of the user device 20 with the server 10 for each subsequently generated secure token, or the server 10 can encrypt values of the parameter(s) determined from the initial request for calendar synchronisation to obtain the encrypted data to be comprised in a subsequently generated secure token. Therefore, the server 10 may always store a generated secure token for the user device 20.

As a further example, step 328 can be performed before step 306. Accordingly, the server 10 may generate and store an initial calendar object for the user as soon as the user has completed the registration process. The initial calendar object need not comprise a secure token when it is generated, as the server 10 may store the secure token in the initial calendar object at a later time, e.g. by modifying one of the fields of the initial calendar object to incorporate the secure token. Similarly, step 350 can be performed before step 342, and at any time after step 330.

Additionally, while the above describes an email address or a mobile telephone number as the information for communicating with the user, this is not limiting. For example, a user device 20 may include (i.e. store in memory instructions for executing) a separate application providing a secure communication channel with an external server. In that case, the server 10 may communicate with the external server, and the external server may communicate with the application running on the user device 20.

Furthermore, the above example embodiments describes the case where, at step 302, the user inputs the credentials and server information into the calendar application manually. Alternatively, the server 10 may generate a provisioning file containing the credentials and the server information, the provisioning file being provided to the user device 20 using any secure channel, and the calendar application running on the user device 20 may process the provisioning file to obtain the credentials and the server information at step 302.

In the above example embodiments, when a request for calendar synchronisation is received from a user device 20 that is not authorised (either not yet authorised or that is designated un-authorised), the server 10 responds to the CalDAV REPORT request from the user device 20 with an empty list. Alternatively, the server 10 may respond to the CalDAV REPORT request with a message indicating that the user device 20 does not have access to the calendar data, such as an HTTP 403: Forbidden response.

In the above example embodiments, the server 10 sends a notification to the user device 20 that a calendar object (or all calendar objects) stored on the server is/are deleted (for example at steps 354 and 516). Instead of an explicit notification, this may be implemented by the server 10 sending the versions of calendar objects stored on the server 10 without including a version for the calendar object(s) that are to be notified as deleted to the user device. As a result, the user device 20 may determine that the calendar object(s) stored on the server were deleted, and the user device may delete the calendar object(s) stored on the user device 20.

As another possible modification, in the above example embodiments, the AES encryption/decryption scheme could be replaced by any other encryption scheme, such as an encryption scheme using block cipher, or other type of encryption such as a stream cipher, or any symmetric or asymmetric encryption scheme, to encrypt the data and prevent or hinder access to the encrypted data in the secure token.

As a further modification, the server 10 may generate different secure tokens for the same user device using different encryption keys. In such a case, if the different secure tokes are to comprise encrypted data based on value(s) of parameter(s) characteristic of the user device 20, the server 10 may encrypt the same data (i.e. data issued from the same values determined from the same request or from the registration of the user device 20) to generate the encrypted data to be included in the different secure tokens. As the server 10 would use different encryption keys, this would avoid the encryption of the same data producing identical secure tokens.

The above example embodiments describe the request for calendar synchronisation sent by the user device 20 as a single transmission (and a single reception by the server 10). However, this is done for simplicity and it would be understood by a skilled person that the user device 20 may first request information to determine if the collection of calendar objects stored on the server 10 and the collection of calendar objects stored on the user device 20 match, which may be indicated by a version of the collection of calendar objects (e.g. by a CalDAV ctag or a DAV:sync-token) which is updated whenever any of the calendar objects stored on the server 10 changes, and which is stored both on the server 10 and the user device 20. The user device 20 may determine that a synchronisation is required if the collection of calendar objects on the server 10 and the user device 20 do not match.

The above example embodiments describe the server 10 as generating a new secure token for each received synchronisation request, and a new calendar object for each new secure token. However, the server 10 may instead re-use calendar objects generated for previous secure tokens. For example, the server 10, having received back a calendar object comprising a secure token from the user device 20, may remove the secure token used for authenticating the request, place a new secure token in the calendar object, and store the modified calendar object on the server 10. At a subsequent synchronisation of calendar data (be it the next synchronisation or any other subsequent synchronisation), the server 10 may change the version of the modified calendar object comprising the new secure token, thereby ensuring the modified calendar object will be requested by the user device 20, and can be used to authenticate a further request for calendar synchronisation.

In the above example embodiments, the server 10 randomly generates the date to be associated with a calendar object comprising a secure token (i.e. the initial calendar object and each new calendar object described above) from a time range that precedes the date of generation of the corresponding calendar object by at least one month, and randomly generates a time within the randomly generated date to be outside of the range of hours to be displayed to the user by default. However, this is non-limiting. For example, in a first alternative, the server 10 may randomly generate the time from a time range covering the entire randomly generated date (i.e. from 00:00 to 23:59). In a second alternative, the server 10 may randomly generate the date to be associated with a calendar object comprising a secure token (the initial calendar object and/or any new calendar object described above) to be in a time range that follows the date of generation of the corresponding calendar object, such as a time range that is at least one month in the future relative to the date of generation of the calendar object. In a further alternatives, the date to be associated with a calendar object comprising a secure token may be predetermined (which may be the same for all calendar objects generated to comprise a secure token or a different date may be predetermined for each calendar object comprising a secure token), or selected from one of a plurality of predetermined dates, or generated using any pseudo random or non-random generation process.

In the above example embodiments, each calendar object comprising a secure token (i.e. the initial calendar object and each new calendar object described above) is associated with a date and a time. However, one or more of the calendar objects comprising a secure token may alternatively be associated with only a date. In this case, the server 10 would not perform the processing related to time in steps 328 and 350, and the comparison in step 412.

In the above example embodiments, a secure token is incorporated (at step 328 and step 350) in a field of the content data of a calendar object normally used to provide a note to the user about the entry. Alternatively, the secure token may be placed in a field of the metadata of the calendar object, which is less likely to be visible to the user, and thereby further obfuscating the secure token from the user. For example, the secure token may be included as the PRODID property of the iCalendar object generated as the calendar object.

In the above example embodiments, each secure token comprises data indicating an expiry time for the secure token. Alternatively, the calendar object comprising the secure token may comprise data indicating an expiry time for the secure token. For example, if the calendar object is generated in accordance with the iCalendar format, the DTEND field may be set to indicate the expiry time, for example by adding the duration of validity of the secure token to the time indicated in the DTSTAMP or the DTSTART field, i.e. DTEND = DTSTAMP + expiry time or DTEND = DTSTART + expiry time. In that case the server 10 would determine the expiry time of a secure token at step 406 based on the value of the DTEND field in the iCalendar object received from the user device 20. More particularly the server 10 would determine whether the value of the DTEND field indicates a time instant that precedes the current time or a time instant that precedes the time at which the request was received, and if so, the server 10 would determine that the secure token has expired, resulting in a YES at step 408.

Alternatively, in another example, a predetermined validity period may be defined for each secure token generated by the server 10, which may be the same or different for each secure token. The server 10 may store, in association with each calendar object comprising a secure token, an indication of the time (e.g. a date or a time instant) at which the secure token was generated. When the server 10 receives the calendar object comprising the secure token from the user device 20, the server 10 obtains the indication of the time at which the secure token was generated that is stored on the server 10, and determines whether the request was received within the predetermined validity period for the secure token starting from the time at which the secure token was generated. If the time elapsed between the time at which the secure token was generated and the time at which the request was received is less than or equal to the predetermined validity period, the server 10 determines that the secure token has not expired at step 408.

In the above example embodiments, the expiry time for the initial secure token and each new secure token is set to be the same. However, the expiry time need not be set the same for each secure token. In addition, a secure token need not have an expiry time. Accordingly, one or more of the secure token at step 326 and/or step 348 may be generated without an expiry time, in which case the server 10 may not perform the processing in steps 406 and 408, or one or more of the secure tokens may be set not to expire, in which case the server 10 may perform the processing in steps 406 and 408 which would necessarily result in the secure token being determined not to have expired (NO at step 408).

In the above example embodiments, the server 10 authenticates the new request for calendar synchronisation at step 372 based on the expiry time and the encrypted data from the secure token, and based on the date and time associated with the calendar object received from the user device 20. However, this is non-limiting, and the server 10 may generate a secure token without any data determined from the user device and without any data indicating an expiry time for the secure token. Accordingly, steps 308, 324, 344, 346, and 406 to 418 may be skipped entirely. In that case, the server 10 would determine whether the authentication of the request is successful based only on the comparison of the secure tokens (at step 402). If the compared secure tokens match (YES at step 404), the authentication is successful, and otherwise, (NO at step 404), the authentication is unsuccessful.

In the above example embodiments, the server 10 may wait for an indication that the synchronisation process has completed normally (e.g. an HTTP response code) before setting the version of a calendar object comprising a secure token stored on the server 10 to be older than the version of the calendar object sent to the user device 20 at step 332 and/or step 380.

In the above example embodiments, the user device 20 is triggered into returning a calendar object comprising a secure token that is stored in the user device 20 back to the server 10 for authenticating a request for calendar synchronisation, by the server 10 setting (at step 332 or at step 380) the version of the calendar object stored on the server 10 to be older than the version of the calendar object sent to the user device 20. Alternatively, the server 10 may change the version of a calendar object comprising a secure token in the transmission to the user device to be a newer version, without changing the version of the corresponding calendar object stored on the server 10. Accordingly, the server 10 need not modify or process the calendar data stored on the server after a transmission to the user device 20 at step 320 and/or at step 378.

In the example embodiments above, a user may delete a calendar object comprising a secure token on the user device 20 or modify a calendar object on the user device 20 to delete the secure token in the calendar object. As an alternative, if a calendar object comprising a secure token is modified or deleted on the user device 20, the server 10 may refuse to allow the modification/deletion. For example, the server 10 may respond to a transmission from the user device 20 indicating the modification/deletion with an HTTP 403: Forbidden message, indicating to the user device 20 that it does not have the authorisation to modify/delete the calendar object. The user may be requested by the server 10 via a separate secure channel to confirm the modification/deletion of the calendar object, which will cause the user device to considered to be un-authorised by the server 10, before the server 10 allows the modification/deletion of the calendar object on the user device 20.

In the above example embodiments, the server 10 determines at step 352 that the user device 20 stores a calendar object comprising a secure token used to authenticate a previous request for calendar synchronisation if a status value stored in the server 10 indicates that the secure token has been used. Alternatively, the server 10 may store a list of secure tokens previously used to authenticate requests for calendar synchronisation, and determine that the user device 20 stores a calendar object comprising a secure token used to authenticate a previous request for calendar synchronisation if the server 10 stores a calendar object comprising any of the secure token in the list.

In the above example embodiments, the user device 20 stores an indication of any calendar object(s) that have been created on the user device 20. The user device 20 may also store an indication of any calendar object(s) that have been modified on the user device 20. The user device 20 may send a created or modified calendar object to the server 10 as soon as the calendar object is created or modified on the user device 20, or, if a connection between the user device 20 and the server 10 is interrupted, the user device 20 may send the created or modified calendar object when the connection with the server 10 is reestablished. In other words, the transmission of any calendar object created or modified on the user device 20 to the server 10 may be performed independently of the synchronisation process described above.

In the above example embodiments, a validation score is determined by the server 10 at step 418 based on value(s) of parameter(s) determined at step 414 from a decryption of the encrypted data of the secure token from the calendar object stored on the server 10. However, in further example embodiments, the encrypted data in the secure token from the calendar object received from the user device may be used to determine the validation score instead. In yet further example embodiments, the server 10 may encrypt only a portion of the value(s) of at least one of the parameter(s) characteristic of the user device to obtain the encrypted data (and, optionally, a portion of the value(s) of at least one of the parameter(s) characteristic of the request for calendar synchronisation, if any is determined at step 308 or 344), and the server 10 may store the remaining value(s) in association with information identifying the user device or in association with the calendar object comprising the secure token that comprises the encrypted data. Then, the server 10 may use both the encrypted data and the remaining, unencrypted value(s) to determine the validation score. As the remaining value(s) were not provided to the user device 20, they can be determined to be less likely to have been compromised, which may improve the security of the calendar data.

In the above example embodiments, the initial secure token and each subsequent secure token is generated in the same way, such that each secure token comprises an equal length expiry time and encrypted data from value(s) of the same parameter(s). However, this is not limiting and the server 10 may determine a different expiry time for each secure token. Additionally or alternatively, the server 10 may use different sets of parameters to generate encrypted data for each secure token. For example, the server 10 may determine as many parameters from each received request for calendar synchronisation as possible and include as many values as possible in the encrypted data. Since not all parameters may be obtained from each request, the validation score will be based on as many parameters characteristic of the user device 20 as were obtained (and optionally, as many parameters characteristic of the request for calendar synchronisation, if any is obtained). If the server 10 cannot obtain sufficient values from the request, or if one or more values considered critical cannot be obtained, the server 10 may determine that a validation score cannot be determined for the request, and authenticate the request based on the comparison of the secure tokens at steps 402 and 404.

In the above example embodiments, the encrypted data generated by the server at step 324 and 346 is based on each value obtained at step 308 and 344 respectively. However, the encryption may be based on parts of the value(s) (e.g. part of the MAC or IP address, or part of the IMEI number). This may reduce the risk of the value of a parameter identifying the user device being transmitted and compromised.

Although in the above example embodiments, each secure token is used for the authentication of the immediately subsequent synchronisation request, this is not limiting. For example, the user device 20 may store at any point in time more than one secure token that has not yet been used to authenticate a synchronisation request. For example, at steps 326, 328, 330 and/or at steps 348, 350, 378 the server 10 may generate and send more than one secure token to the user device 20, each secure token comprised in a different calendar object. Then, the server 10 may use one of these secure tokens to authenticate the next subsequent synchronisation request from the user device 20, and another one of these secure tokens to authenticate a further subsequent synchronisation request. Alternatively or additionally, if the user device 20 stores more than one secure token that has not yet been used to authenticate a synchronisation request, the server 10 may trigger the user device 20 to return two or more of these secure tokens when the user device 20 sends a request for calendar synchronisation, and the server 10 may authenticate the request for calendar synchronisation using more than one secure token.

In yet further example embodiments, a calendar object may comprise more than one secure token. For example, the server 10 may, when generating the calendar object, incorporate a first secure token in one field of the calendar object, and incorporate a second, different, secure token in another field of the calendar object. Accordingly, a larger number of secure tokens can be provided to the user device without a significant increase in the number of calendar objects that need to be provided to the user device.

In the above example embodiments, the secure token is stored in one field of the calendar object. However, this is not limiting. Instead, the server 10 may store a part of the secure token in a first field of the calendar object (e.g. a field of content data) and a second part of the secure token in a separate field of the calendar object (e.g. a field of metadata). The secure token can be split into any number of parts, and the number of parts is not limited to two.

In the above example embodiments, each element of the validation score calculated by the server 10 at step 416 is based on a comparison of two sets of values of the parameter(s) characteristic of the user device (and optionally, two sets of values of the parameter(s) characteristic of the request for calendar synchronisation), one set being from the encrypted data from a secure token stored on the server 10 and the other set being determined from the synchronisation request being authenticated. However, this is not limiting and the server 10 may perform a comparison of a plurality of sets of values, each set obtained from a different past request for calendar synchronisation, allowing the server 10 to determine variations in patterns in the set of values that may be indicative of a fraudulent attempt to access calendar data.

In the above example embodiments, at step 506, the server 10 stores the indication that the request for calendar synchronisation was not authenticated in association with the value(s) of the at least one parameter that is characteristic of the user device 20. Alternatively, the server 10 may store the indication that the request for calendar synchronisation was not authenticated in association with the new value of each of the at least one parameter that is characteristic of the user device 20 at a different time, for example after step 374 before step 376.

Other means for the server 10 to store that a request for calendar synchronisation from the user device 20 was not authenticated are also possible. For example, the server 10 can store the secure token sent to a user device 20 in association with information identifying the user device 20 to which the secure token was sent, for example in a first list, and store secure tokens received from user devices and used to unsuccessfully authenticate requests for calendar synchronisation, for example in a second list. The server 10 can determine that a previous request for calendar synchronisation from a particular user device 20 was not authenticated by correlating information from both lists (e.g. if information identifying the user device in the first list is associated with one of the secure tokens stored in the second list).

In the above example embodiments, the server 10 identifies the user device 20 using value(s) of the at least one parameter that is characteristic of the user device 20 determined at step 308 or at step 344, for example to determine how to process attempts to synchronise calendar data from the user device 20. Alternatively, the server 10 may generate a different unique address where calendar data is stored for each user device 20, the address being provided to the user to be entered manually or in a provisioning file. Accordingly, when the user device 20 sends a request for calendar data stored at a specific address, the server 10 may identify the user device 20 based on the address from which calendar data is requested. In that case, the server 10 need not determine value(s) of the parameter(s) characteristic of the user device 20 to identify the user device 20 at step 308 or 344. In implementations in which the server 10 stores a device status value for the user device 20 at step 316, it may be stored in association with the address for calendar data corresponding to the user device as the information identifying the user device 20 (instead of the value(s) of the parameter(s) characteristic of the user device).

In the above example embodiments, at steps 410 and 412 the server 10 determines, a binary match/no match decision when comparing dates and times associated with calendar objects. However, this is non-limiting and the comparison of dates and/or times associated with calendar objects could have more than two possible outcomes, and the score assigned to the outcome need not be predetermined. For example, the server 10 may calculate a difference between the dates associated with calendar objects, and assign a score based on this difference (for example, the value assigned may represent the difference in the number of days), where a smaller difference is assigned a score indicating that the request is relatively more likely to be from an authorised user device 20 (i.e. an authentic request) than a score assigned to a larger difference, on the basis that a small change in the date associated with the calendar object may be due to an inadvertent manipulation from the user. The increased granularity in possible scores may allow the server 10 to better differentiate, based on the validation score, authentic requests from fraudulent requests.

As a modification of the processing in Figure 7, at step 504, the server 10 may replace the content data from the other calendar objects with dummy data, and at step 508, the server 10 may send each other calendar object(s) to the user device with dummy data. Similarly, in the processing of Figure 8A, at step 608, the server 10 may delete all calendar objects stored on the server, and when the server 10 receives a new request for calendar synchronisation at step 616, the processing may continue as described in steps 516 to 522.

A person skilled in the art will, of course, recognise that modifications other than those described above can be made.

The example aspects described here avoid limitations, specifically rooted in computer technology, relating to the security of conventional calendar data. By virtue of the example aspects described herein, security of calendar data may be improved and this may be achieved without any modification of the calendar software on a user device. Also, by virtue of the foregoing capabilities of the example aspects described herein, which are rooted in computer technology, the example aspects described herein improve computers and computer processing/functionality, and also improve the field(s) of at least data processing and data security.

In the foregoing description, example aspects are described with reference to several example embodiments. Accordingly, the specification should be regarded as illustrative, rather than restrictive. Similarly, the figures illustrated in the drawings, which highlight the functionality and advantages of the example embodiments, are presented for example purposes only. The architecture of the example embodiments is sufficiently flexible and configurable, such that it may be utilized in ways other than those shown in the accompanying figures.

Software embodiments of the examples presented herein may be provided as, a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/-computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the example embodiments described herein. Such software may include without limitation device drivers, operating systems, and user applications. Ultimately, such computer-readable media or storage device(s) further include software for performing example aspects of the invention, as described above.

Included in the programming and/or software of the system are software modules for implementing the procedures described herein. In some example embodiments herein, a module includes software, although in other example embodiments herein, a module includes hardware, or a combination of hardware and software.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above described example embodiments, but should be defined only in accordance with the following claims.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that any procedures recited in the claims need not be performed in the order presented.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments and embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

The apparatuses described herein may be embodied in other specific forms without departing from the characteristics thereof. The foregoing embodiments are illustrative rather than limiting of the described systems and methods. Scope of the apparatuses described herein is thus indicated by the appended claims, rather than the foregoing description.

**Claims**

1. A computer-implemented method performed by a server, for generating secure calendar data for a user device, the method comprising:

   generating a first calendar object associated with a first date and comprising a first secure token;
   storing the first calendar object on the server;
   providing the first calendar object to the user device;
   storing on the server a plurality of further calendar objects for communication to the user device, each of the further calendar objects being associated with a respective date and comprising content data defining an entry in the calendar;
   receiving a request for calendar synchronisation from the user device;
   generating a second calendar object associated with a second date and comprising a second secure token;
   storing the second calendar object on the server;
   notifying the user device of a respective version of the first calendar object, the second calendar object, and each of the plurality of further calendar objects stored on the server, wherein the user device is notified that the first calendar object on the server has a version older than the first calendar object provided to the user device;
   receiving from the user device the first calendar object and any calendar object stored on the user device having a version that is newer on the user device than the version notified by the server;
   authenticating the request by comparing the first secure token from the first calendar object received from the user device and the first secure token from the first calendar object stored on the server;
   upon successful authentication of the request, providing to the user device the second calendar object comprising the second secure token and any calendar object of the plurality of further calendar objects stored on the server having a version that is newer on the server than on the user device; and
   upon unsuccessful authentication of the request, restricting the user device from accessing the content data in the further calendar objects.

2. The method of Claim 1, further comprising:

   setting the version of the first calendar object on the server to be older than the version of the first calendar object provided to the user device, and wherein the older version of the first calendar object is stored on the server prior to receiving the request for calendar synchronisation from the user device; and
   setting the version of the second calendar object on the server to be older than the version of the second calendar object provided to the user device, and wherein the older version of the second calendar object is stored on the server prior to receiving a second request for calendar synchronisation from the user device.

3. The method of Claim 1 or Claim 2, further comprising, when the authentication of the request is successful:

   receiving a further request for calendar synchronisation from the user device; and
   notifying the user device that the first calendar object stored on the server has been deleted.

4. The method of any of Claims 1 to 3, further comprising:
   receiving further requests for calendar synchronisation from the user device, wherein, for each new request for calendar synchronisation from the user device, the server generates a new calendar object comprising a new secure token and, if the new request is authenticated, the new calendar object is provided to the user device.

26

**5.** The method of Claim 4, further comprising:
in response to each of the further requests for calendar synchronisation, notifying the user device that a previous calendar object comprising a secure token previously provided to the user device has been has been deleted on the server.

**6.** The method of any of Claim 1 to 5, further comprising:

determining a first value of at least one parameter that is at least partially characteristic of the user device prior to receiving the request for calendar synchronisation, the first value of each parameter being determined from a registration of the user device with the server and/or from an earlier request for calendar synchronisation from the user device; and
determining a second value of each parameter from the request for calendar synchronisation;
and wherein authenticating the request further comprises:

determining a validation score based on a comparison of each first value and the corresponding second value;
determining the authentication of the request to be unsuccessful if the validation score is outside of a predetermined scoring range.

**7.** The method of Claim 6, wherein the first secure token comprises encrypted data based on each first value, and the validation score is determined based on a comparison of each first value determined from the encrypted data of the first secure token from the first calendar object stored on the server and the corresponding second value determined from the synchronisation request.

**8.** The method of Claim 6 or Claim 7, wherein the validation score is further determined based on whether a date associated with the first calendar object received from the user device matches the first date of the first calendar object stored on the server.

**9.** The method of any of Claims 6 to 8, wherein the first calendar object is associated with a first time within the first date, and
the validation score is further determined based on whether the first calendar object received from the user device is associated with the first time of the first calendar object stored on the server.

**10.** The method of any of Claims 1 to 9, wherein each of the first date and the second date is generated randomly by the server.

**11.** The method of any of Claims 1 to 10, wherein the server performs the generation of the first calendar object such that the first date precedes the date of generation of the first calendar object by at least one month, and the server performs the generation of the second calendar object such that the second date precedes the date of generation of the second calendar object by at least one month.

**12.** The method of any of Claims 1 to 11, wherein:

the first secure token comprises data indicating an expiry time for the first secure token, and wherein the authentication of the request is determined to be unsuccessful if the request is received after the expiry time has passed;
or
the authentication of the request is determined to be unsuccessful if a time elapsed between the provision of the first calendar object to the user device and the reception of the request by the server is greater than a predetermined validity period for the first secure token.

**13.** The method of any of Claim 1 to 12, wherein, upon unsuccessful authentication, the server restricts the user device from accessing the content data in the further calendar objects by not providing to the user device any of the plurality of further calendar objects stored on the server.

**14.** The method of any of Claims 1 to 13, wherein:
upon unsuccessful authentication, the server restricts the user device from accessing the content data in the further calendar objects by:

removing the second secure token from the second calendar object stored on the server;

removing the content data in any calendar object of the plurality of further calendar objects stored on the server having a version that is newer on the server than on the user device;

providing to the user device the second calendar object without the second secure token and each calendar object of the plurality of further calendar objects stored on the server having a version that is newer on the server than on the user device without its content data;

receiving a further request for calendar synchronisation from the user device; and

in response to the further request for calendar synchronisation, notifying the user device that all of the plurality of further calendar objects stored on the server are deleted;

or

upon unsuccessful authentication, the server restricts the user device from accessing the content data in the further calendar objects by:

> replacing the second secure token in the second calendar object with dummy data;
>
> replacing the content data in each of the plurality of further calendar objects stored on the server with dummy data;
>
> providing to the user device the second calendar object comprising dummy data and any calendar object of the plurality of further calendar objects having a version that is newer on the server than on the user device, each of the further calendar objects provided to the user device comprising dummy data;
>
> receiving a further request for calendar synchronisation from the user device;
>
> in response to the further request for calendar synchronisation, notifying the user device of a respective version of each of the plurality of further calendar objects stored on the server, wherein, for each further calendar object that has previously been provided to the user device, the user device is notified that the further calendar object on the server has a version newer than the corresponding calendar object previously provided to the user device; and
>
> providing to the user device each of the plurality of further calendar objects stored on the server, each calendar object provided to the user device comprising the dummy data.

**15.** A system for generating secure calendar data, the system comprising a server configured to generate the secure calendar data by performing a process as set out in at least one of Claims 1 to 14.

**16.** A computer program comprising instructions which, when executed by at least one processor, cause the at least one processor to perform a method as set out in at least one of Claims 1 to 14.

**Patentansprüche**

**1.** Computerimplementiertes Verfahren zur Erzeugung sicherer Kalenderdaten für eine Benutzervorrichtung, das von einem Server durchgeführt wird, wobei das Verfahren Folgendes umfasst:

Erzeugen eines ersten Kalenderobjekts, das einem ersten Datum zugeordnet ist und einen ersten sicheren Token umfasst;

Speichern des ersten Kalenderobjekts auf dem Server;

Bereitstellen des ersten Kalenderobjekts an die Benutzervorrichtung;

Speichern einer Vielzahl von weiteren Kalenderobjekten auf dem Server zur Kommunikation mit der Benutzervorrichtung, wobei jedes der weiteren Kalenderobjekte einem jeweiligen Datum zugeordnet ist und Inhaltsdaten umfasst, die einen Eintrag in den Kalender definieren;

Empfangen einer Anforderung für Kalendersynchronisation von der Benutzervorrichtung;

Erzeugen eines zweiten Kalenderobjekts, das einem zweiten Datum zugeordnet ist und einen zweiten sicheren Token umfasst;

Speichern des zweiten Kalenderobjekts auf dem Server;

Mitteilen an die Benutzervorrichtung einer jeweiligen Version des ersten Kalenderobjekts, des zweiten Kalenderobjekts und von jedem der Vielzahl von weiteren Kalenderobjekten, die auf dem Server gespeichert sind, wobei der Benutzervorrichtung mitgeteilt wird, dass das erste Kalenderobjekt auf dem Server eine ältere Version aufweist als das erste Kalenderobjekt, das der Benutzervorrichtung bereitgestellt wird;

Empfangen, von der Benutzervorrichtung, des ersten Kalenderobjekts und eines beliebigen auf der Benutzervorrichtung gespeicherten Kalenderobjekts, das eine Version aufweist, die auf der Benutzervorrichtung neuer ist als die vom Server mitgeteilte Version;

Authentifizieren der Anforderung durch Vergleichen des ersten sicheren Tokens von dem ersten Kalenderobjekt, das von der Benutzervorrichtung empfangen wurde, und des ersten sicheren Tokens von dem ersten Kalenderobjekt, das auf dem Server gespeichert ist;

nach erfolgreicher Authentifizierung der Anforderung, Bereitstellen, an die Benutzervorrichtung, des zweiten Kalenderobjekts, das den zweiten sicheren Token umfasst, und eines beliebigen Kalenderobjekts der Vielzahl von weiteren Kalenderobjekten, die auf dem Server gespeichert sind, die eine Version aufweisen, die auf dem Server neuer ist als auf der Benutzervorrichtung; und

nach nicht erfolgreicher Authentifizierung der Anforderung, Einschränken des Zugangs der Benutzervorrichtung auf die Inhaltsdaten in den weiteren Kalenderobjekten.

2. Verfahren nach Anspruch 1, weiter umfassend:

Setzen der Version des ersten Kalenderobjekts auf dem Server als älter als die Version des ersten Kalenderobjekts, die der Benutzervorrichtung bereitgestellt wird, und wobei die ältere Version des ersten Kalenderobjekts vor Empfangen der Anforderung für Kalendersynchronisation von der Benutzervorrichtung auf dem Server gespeichert wird; und

Setzen der Version des zweiten Kalenderobjekts auf dem Server als älter als die Version des zweiten Kalenderobjekts, die der Benutzervorrichtung bereitgestellt wird, und wobei die ältere Version des zweiten Kalenderobjekts vor Empfangen einer zweiten Anforderung für Kalendersynchronisation von der Benutzervorrichtung auf dem Server gespeichert wird.

3. Verfahren nach Anspruch 1 oder Anspruch 2, weiter umfassend, wenn die Authentifizierung der Anforderung erfolgreich ist:

Empfangen einer weiteren Anforderung für Kalendersynchronisation von der Benutzervorrichtung; und
Mitteilen an die Benutzervorrichtung, dass das erste Kalenderobjekt, das auf dem Server gespeichert ist, gelöscht wurde.

4. Verfahren nach einem der Ansprüche 1 bis 3, weiter umfassend:
Empfangen weiterer Anfragen für Kalendersynchronisation von der Benutzervorrichtung, wobei für jede neue Anforderung für Kalendersynchronisation von der Benutzervorrichtung der Server ein neues Kalenderobjekt erzeugt, das einen neuen sicheren Token umfasst und, wenn die neue Anforderung authentifiziert ist, das neue Kalenderobjekt an die Benutzervorrichtung bereitgestellt wird.

5. Verfahren nach Anspruch 4, weiter umfassend:
als Reaktion auf jede der weiteren Anfragen für Kalendersynchronisation, Mitteilen an die Benutzervorrichtung, dass ein vorheriges Kalenderobjekt, das einen sicheren Token umfasst und der Benutzervorrichtung zuvor bereitgestellt wurde, auf dem Server gelöscht wurde.

6. Verfahren nach einem Anspruch 1 bis 5, weiter umfassend:

Bestimmen eines ersten Wertes von mindestens einem Parameter, der mindestens teilweise für die Benutzervorrichtung bezeichnend ist, vor Empfangen der Anforderung für Kalendersynchronisation, wobei der erste Wert von jedem Parameter aus einer Registrierung der Benutzervorrichtung bei dem Server und/oder aus einer früheren Anforderung für Kalendersynchronisation von der Benutzervorrichtung bestimmt wird; und

Bestimmen eines zweiten Werts für jeden Parameter aus der Anforderung für Kalendersynchronisation; und wobei Authentifizieren der Anforderung weiter Folgendes umfasst:

Bestimmen einer Validierungspunktezahl basierend auf einem Vergleich von jedem ersten Wert und dem entsprechenden zweiten Wert;

Bestimmen, dass die Authentifizierung der Anforderung nicht erfolgreich war, wenn die Validierungspunktezahl außerhalb eines vorbestimmten Punktebereichs liegt.

7. Verfahren nach Anspruch 6, wobei der erste sichere Token basierend auf jedem ersten Wert verschlüsselte Daten umfasst und die Validierungspunktezahl basierend auf einem Vergleich von jedem ersten Wert, der aus den verschlüsselte Daten des ersten sicheren Tokens aus dem ersten Kalenderobjekt, das auf dem Server gespeichert ist, bestimmt wird, und dem entsprechenden zweiten Wert bestimmt wird, der aus der Synchronisationsanforderung bestimmt wird.

8. Verfahren nach Anspruch 6 oder Anspruch 7, wobei die Validierungspunktezahl weiter basierend darauf bestimmt wird, ob ein Datum, das dem ersten Kalenderobjekt zugeordnet ist, das von der Benutzervorrichtung empfangen wurde, mit dem ersten Datum des ersten Kalenderobjekts übereinstimmt, das auf dem Server gespeichert ist.

9. Verfahren nach einem der Ansprüche 6 bis 8, wobei das erste Kalenderobjekt einer ersten Zeit innerhalb des ersten Datums zugeordnet wird, und
die Validierungspunktezahl weiter basierend darauf bestimmt wird, ob das erste Kalenderobjekt, das von der Benutzervorrichtung empfangen wurde, der ersten Zeit des ersten Kalenderobjekts zugeordnet ist, das auf dem Server gespeichert ist.

10. Verfahren nach einem der Ansprüche 1 bis 9, wobei jedes des ersten Datums und des zweiten Datums vom Server zufällig erzeugt wird.

11. Verfahren nach einem der Ansprüche 1 bis 10, wobei der Server Erzeugung des ersten Kalenderobjekts so durchführt, dass das erste Datum mindestens einen Monat vor dem Datum der Erzeugung des ersten Kalenderobjekts liegt, und der Server Erzeugung des zweiten Kalenderobjekts so durchführt, dass das zweite Datum mindestens einen Monat vor dem Datum der Erzeugung des zweiten Kalenderobjekts liegt.

12. Verfahren nach einem der Ansprüche 1 bis 11, wobei:

    der erste sichere Token Daten umfasst, die einen Ablaufzeitpunkt für den ersten sicheren Token angeben, und wobei bestimmt wird, dass die Authentifizierung der Anforderung nicht erfolgreich ist, wenn die Anforderung empfangen wird, nachdem der Ablaufzeitpunkt überschritten war;
    oder
    bestimmt wird, dass die Authentifizierung der Anforderung nicht erfolgreich ist, wenn eine zwischen der Bereitstellung des ersten Kalenderobjekts an die Benutzervorrichtung und dem Empfang der Anforderung durch den Server verstrichene Zeit größer ist als eine vorbestimmte Gültigkeitszeitdauer für den ersten sicheren Token.

13. Verfahren nach einem Anspruch 1 bis 12, wobei nach nicht erfolgreicher Authentifizierung der Server den Zugang der Benutzervorrichtung auf die Inhaltsdaten in den weiteren Kalenderobjekten einschränkt, indem der Benutzervorrichtung keine der Vielzahl von weiteren Kalenderobjekten, die auf dem Server gespeichert sind, bereitgestellt werden.

14. Verfahren nach einem der Ansprüche 1 bis 13, wobei:
nach nicht erfolgreicher Authentifizierung der Server den Zugang der Benutzervorrichtung auf die Inhaltsdaten in den weiteren Kalenderobjekten einschränkt durch:

    Entfernen des zweiten sicheren Tokens aus dem zweiten Kalenderobjekt, das auf dem Server gespeichert ist;
    Entfernen der Inhaltsdaten in einem beliebigen Kalenderobjekt der Vielzahl von weiteren Kalenderobjekten, die auf dem Server gespeichert sind, die eine Version aufweisen, die auf dem Server neuer ist als auf der Benutzervorrichtung;
    Bereitstellen, an die Benutzervorrichtung, des zweiten Kalenderobjekts ohne den zweiten sicheren Token und jedes Kalenderobjekts der Vielzahl von weiteren Kalenderobjekten, die auf dem Server gespeichert sind, die eine Version aufweisen, die auf dem Server neuer ist als auf der Benutzervorrichtung, ohne seine Inhaltsdaten;
    Empfangen einer weiteren Anforderung für Kalendersynchronisation von der Benutzervorrichtung; und
    als Reaktion auf die weitere Anforderung für Kalendersynchronisation, Mitteilen an die Benutzervorrichtung, dass alle der Vielzahl von weiteren Kalenderobjekten, die auf dem Server gespeichert sind, gelöscht sind;
    oder
    nach nicht erfolgreicher Authentifizierung der Server den Zugang der Benutzervorrichtung auf die Inhaltsdaten in den weiteren Kalenderobjekten einschränkt durch:

    Ersetzen des zweiten sicheren Tokens im zweiten Kalenderobjekt durch Dummy-Daten;
    Ersetzen der Inhaltsdaten in jedem der Vielzahl von weiteren Kalenderobjekten, die auf dem Server gespeichert sind, durch Dummy-Daten;
    Bereitstellen, an die Benutzervorrichtung, des zweiten Kalenderobjekts, das Dummy-Daten umfasst, und eines beliebigen Kalenderobjekts der Vielzahl von weiteren Kalenderobjekten, die eine Version aufweisen, die auf dem Server neuer ist als auf der Benutzervorrichtung, wobei jedes der weiteren Kalenderobjekte, das an die Benutzervorrichtung bereitgestellt wird, Dummy-Daten umfasst;

Empfangen einer weiteren Anforderung für Kalendersynchronisation von der Benutzervorrichtung;

als Reaktion auf die weitere Anforderung für Kalendersynchronisation, Mitteilen an die Benutzervorrichtung einer jeweiligen Version von jedem der Vielzahl von weiteren Kalenderobjekten, die auf dem Server gespeichert sind, wobei für jedes weitere Kalenderobjekt, das der Benutzervorrichtung zuvor bereitgestellt wurde, der Benutzervorrichtung mitgeteilt, wird, dass das weitere Kalenderobjekt auf dem Server eine neuere Version aufweist als das entsprechende Kalenderobjekt, das der Benutzervorrichtung zuvor bereitgestellt wurde; und

Bereitstellen, an die Benutzervorrichtung, jedes der Vielzahl von weiteren Kalenderobjekten, die auf dem Server gespeichert sind, wobei jedes Kalenderobjekt, das der Benutzervorrichtung bereitgestellt wird, die Dummy-Daten umfasst.

**15.** System zur Erzeugung sicherer Kalenderdaten, wobei das System einen Server umfasst, der konfiguriert ist, um die sicheren Kalenderdaten durch Durchführen eines Prozesses, wie er in mindestens einem der Ansprüche 1 bis 14 dargelegt ist, zu erzeugen.

**16.** Computerprogramm, umfassend Anweisungen, die, wenn sie von mindestens einem Prozessor ausgeführt werden, bewirken, dass der mindestens eine Prozessor ein Verfahren durchführt, wie es in mindestens einem der Ansprüche 1 bis 14 dargelegt ist.

## Revendications

**1.** Procédé implémenté par ordinateur mis en œuvre par un serveur, pour générer des données de calendrier sécurisées pour un dispositif utilisateur, le procédé comprenant :

la génération d'un premier objet de calendrier associé à une première date et comprenant un premier jeton sécurisé ;

le stockage du premier objet de calendrier sur le serveur ;

la fourniture du premier objet de calendrier au dispositif utilisateur ;

le stockage sur le serveur d'une pluralité d'autres objets de calendrier pour communication au dispositif utilisateur, chacun des autres objets de calendrier étant associé à une date respective et comprenant des données de contenu définissant une entrée dans le calendrier ;

la réception d'une demande de synchronisation de calendrier en provenance du dispositif utilisateur ;

la génération d'un deuxième objet de calendrier associé à une deuxième date et comprenant un deuxième jeton sécurisé ;

le stockage du deuxième objet de calendrier sur le serveur ;

la notification au dispositif utilisateur d'une version respective du premier objet de calendrier, du deuxième objet de calendrier, et de chacun de la pluralité d'autres objets de calendrier stockés sur le serveur, dans lequel le dispositif utilisateur est notifié que le premier objet de calendrier sur le serveur présente une version plus ancienne que celle du premier objet de calendrier fourni au dispositif utilisateur ;

la réception en provenance du dispositif utilisateur du premier objet de calendrier et de tout objet de calendrier stocké sur le dispositif utilisateur présentant une version qui est plus récente sur le dispositif utilisateur que la version notifiée par le serveur ;

l'authentification de la demande en comparant le premier jeton sécurisé issu du premier objet de calendrier reçu en provenance du dispositif utilisateur et le premier jeton sécurisé issu du premier objet de calendrier stocké sur le serveur ;

lors d'une réussite d'authentification de la demande, la fourniture au dispositif utilisateur du deuxième objet de calendrier comprenant le deuxième jeton sécurisé et tout objet de calendrier de la pluralité d'autres objets de calendrier stockés sur le serveur présentant une version qui est plus récente sur le serveur que sur le dispositif utilisateur ; et

lors d'un échec d'authentification de la demande, la restriction de l'accès du dispositif utilisateur aux données de contenu dans les autres objets de calendrier.

**2.** Procédé selon la revendication 1, comprenant en outre :

la définition de la version du premier objet de calendrier sur le serveur comme étant plus ancienne que la version du premier objet de calendrier fourni au dispositif utilisateur, et dans lequel la version plus ancienne du premier objet de calendrier est stockée sur le serveur avant la réception de la demande de synchronisation de calendrier en provenance du dispositif utilisateur ; et

la définition de la version du deuxième objet de calendrier sur le serveur comme étant plus ancienne que la version du deuxième objet de calendrier fourni au dispositif utilisateur, et dans lequel la version plus ancienne du deuxième objet de calendrier est stockée sur le serveur avant la réception d'une deuxième demande de synchronisation de calendrier en provenance du dispositif utilisateur.

3. Procédé selon la revendication 1 ou la revendication 2, comprenant en outre, lorsque l'authentification de la demande est réussie :

la réception d'une autre demande de synchronisation de calendrier en provenance du dispositif utilisateur ; et
la notification au dispositif utilisateur que le premier objet de calendrier stocké sur le serveur a été supprimé.

4. Procédé selon l'une quelconque des revendications 1 à 3, comprenant en outre :
la réception d'autres demandes de synchronisation de calendrier en provenance du dispositif utilisateur, dans lequel, pour chaque nouvelle demande de synchronisation de calendrier en provenance du dispositif utilisateur, le serveur génère un nouvel objet de calendrier comprenant un nouveau jeton sécurisé et, si la nouvelle demande est authentifiée, le nouvel objet de calendrier est fourni au dispositif utilisateur.

5. Procédé selon la revendication 4, comprenant en outre :
en réponse à chacune des autres demandes de synchronisation de calendrier, la notification au dispositif utilisateur qu'un objet de calendrier précédent comprenant un jeton sécurisé précédemment fourni au dispositif utilisateur a été supprimé sur le serveur.

6. Procédé selon l'une quelconque des revendications 1 à 5, comprenant en outre :

la détermination d'une première valeur d'au moins un paramètre qui est au moins partiellement caractéristique du dispositif utilisateur avant la réception de la demande de synchronisation de calendrier, la première valeur de chaque paramètre étant déterminée à partir d'un enregistrement du dispositif utilisateur avec le serveur et/ou à partir d'une demande antérieure de synchronisation de calendrier en provenance du dispositif utilisateur ; et
la détermination d'une deuxième valeur de chaque paramètre à partir de la demande de synchronisation de calendrier ;
et dans lequel l'authentification de la demande comprend en outre :

la détermination d'une note de validation sur la base d'une comparaison de chaque première valeur et de la deuxième valeur correspondante ;
la détermination de l'authentification de la demande comme étant un échec si la note de validation est en dehors d'une plage de notation prédéterminée.

7. Procédé selon la revendication 6, dans lequel le premier jeton sécurisé comprend des données chiffrées basées sur chaque première valeur, et la note de validation est déterminée sur la base d'une comparaison de chaque première valeur déterminée à partir des données chiffrées du premier jeton sécurisé issu du premier objet de calendrier stocké sur le serveur et de la deuxième valeur correspondante déterminée à partir de la demande de synchronisation.

8. Procédé selon la revendication 6 ou la revendication 7, dans lequel la note de validation est en outre déterminée selon qu'une date associée au premier objet de calendrier reçu en provenance du dispositif utilisateur correspond ou non à la première date du premier objet de calendrier stocké sur le serveur.

9. Procédé selon l'une quelconque des revendications 6 à 8, dans lequel le premier objet de calendrier est associé à une première heure dans la première date, et
la note de validation est en outre déterminée selon que le premier objet de calendrier reçu en provenance du dispositif utilisateur est associé ou non à la première heure du premier objet de calendrier stocké sur le serveur.

10. Procédé selon l'une quelconque des revendications 1 à 9, dans lequel chacune de la première date et de la deuxième date est générée de manière aléatoire par le serveur.

11. Procédé selon l'une quelconque des revendications 1 à 10, dans lequel le serveur met en œuvre la génération du premier objet de calendrier de telle sorte que la première date précède la date de génération du premier objet de calendrier d'au moins un mois, et le serveur met en œuvre la génération du deuxième objet de calendrier de telle sorte que la deuxième date précède la date de génération du deuxième objet de calendrier d'au moins un mois.

12. Procédé selon l'une quelconque des revendications 1 à 11, dans lequel :

le premier jeton sécurisé comprend des données indiquant un temps d'expiration pour le premier jeton sécurisé, et dans lequel l'authentification de la demande est déterminée comme étant un échec si la demande est reçue après que le temps d'expiration a été dépassé ;
ou
l'authentification de la demande est déterminée comme étant un échec si un temps écoulé entre la fourniture du premier objet de calendrier au dispositif utilisateur et la réception de la demande par le serveur est supérieur à une période de validité prédéterminée pour le premier jeton sécurisé.

13. Procédé selon l'une quelconque des revendications 1 à 12, dans lequel, lors d'un échec d'authentification, le serveur restreint l'accès du dispositif utilisateur aux données de contenu dans les autres objets de calendrier en ne fournissant au dispositif utilisateur aucun de la pluralité d'autres objets de calendrier stockés sur le serveur.

14. Procédé selon l'une quelconque des revendications 1 à 13, dans lequel :
lors d'un échec d'authentification, le serveur restreint l'accès du dispositif utilisateur aux données de contenu dans les autres objets de calendrier en :

retirant le deuxième jeton sécurisé du deuxième objet de calendrier stocké sur le serveur ;
retirant les données de contenu dans tout objet de calendrier de la pluralité d'autres objets de calendrier stockés sur le serveur présentant une version qui est plus récente que celle sur le dispositif utilisateur ;
fournissant au dispositif utilisateur le deuxième objet de calendrier sans le deuxième jeton sécurisé et chaque objet de calendrier de la pluralité d'autres objets de calendrier stockés sur le serveur présentant une version qui est plus récente sur le serveur que sur le dispositif utilisateur sans ses données de contenu ;
recevant une autre demande de synchronisation de calendrier en provenance du dispositif utilisateur ; et
en réponse à l'autre demande de synchronisation de calendrier, notifiant au dispositif utilisateur que la totalité de la pluralité d'autres objets de calendrier stockés sur le serveur sont supprimés ;
ou
lors d'un échec d'authentification, le serveur restreint l'accès du dispositif utilisateur aux données de contenu dans les autres objets de calendrier en :

remplaçant le deuxième jeton sécurisé dans le deuxième objet de calendrier par des données factices ;
remplaçant les données de contenu dans chacun de la pluralité d'autres objets de calendrier stockés sur le serveur par des données factices ;
fournissant au dispositif utilisateur le deuxième objet de calendrier comprenant des données factices et tout objet de calendrier de la pluralité d'autres objets de calendrier présentant une version qui est plus récente sur le serveur que sur le dispositif utilisateur, chacun des autres objets de calendrier fournis au dispositif utilisateur comprenant des données factices ;
recevant une autre demande de synchronisation de calendrier en provenance du dispositif utilisateur ;
en réponse à l'autre demande de synchronisation de calendrier, notifiant au dispositif utilisateur une version respective de chacun de la pluralité d'autres objets de calendrier stockés sur le serveur, dans lequel, pour chaque autre objet de calendrier qui a précédemment été fourni au dispositif utilisateur,
le dispositif utilisateur est notifié que l'autre objet de calendrier sur le serveur présente une version plus récente que l'objet de calendrier correspondant précédemment fourni au dispositif utilisateur ; et
fournissant au dispositif utilisateur chacun de la pluralité d'autres objets de calendrier stockés sur le serveur, chaque objet de calendrier fourni au dispositif utilisateur comprenant les données factices.

15. Système de génération de données de calendrier sécurisées, le système comprenant un serveur configuré pour générer les données de calendrier sécurisées en mettant en œuvre un processus tel qu'exposé dans au moins une des revendications 1 à 14.

16. Programme informatique comprenant des instructions qui, lorsqu'elles sont mises en œuvre par au moins un processeur, amènent l'au moins un processeur à mettre en œuvre un procédé tel qu'exposé dans au moins l'une des revendications 1 à 14.

Fig. 1

## Fig. 2

Fig. 3

Fig. 4

Server            User device

START

302

Receive credentials and
server information

306

Receive request for initial
calendar synchronisation

304

Send request for initial
calendar synchronisation

308

Determine an initial value of at
least one parameter that is at
least partially characteristic of
the user device

D

310

Request user to authorise
the user device

312

Received request to
authorise user device

316

Receive authorisation
response

314

Send authorisation
response

318

Yes

Is user device
authorised?

No

319

Store indication
that user device is
authorised

320

Respond to request for
calendar synchronisation
that no objects are
stored on server

322

Receive response

A

Fig. 5A

Server

User device

(A)

⌒324

Encrypt each initial value to obtain encrypted data

⌒326

Generate an initial secure token comprising the encrypted data and data indicating an expiry time for the initial secure token

⌒328

Generate and store initial calendar object comprising the initial secure token, and a status value indicating that the initial secure token is valid

⌒330

Send the initial calendar object comprising the initial secure token to the user device

⌒336

Receive the initial calendar object

⌒332

Set the version of the initial calendar object on the server to be older than the version of the initial calendar object provided to the user device

⌒338

Store initial calendar object comprising initial secure token

⌒334

Store a plurality of further calendar objects each associated with a respective date and comprising content data defining an event in the calendar

(B)

Fig. 5B

Server

342 — Receive new request for calendar synchronisation

344 — Determine a new value of each parameter from the new request for calendar synchronisation

346 — Encrypt each new value to obtain new encrypted data

348 — Generate a new secure token comprising the new encrypted data and data indicating an expiry time for the new secure token

350 — Generate and store a new calendar object comprising the new secure token and a states value indicating that the new secure token is valid.

352 — Does user device store a calendar object comprising a secure token used to authenticate a previous request?

No

Yes

354 — Send notification that the calendar object comprising the secure token used to authenticate the previous request has been deleted on the server.

360 — Send versions of all calendar objects stored on the server, including the older version of the calendar object with the secure token from the previous iteration and the version of the new calendar object

368 — Receive the calendar object with the secure token from the previous iteration + any other calendar object having a newer version on the user device than the version on the server.

370 — Receive request for new calendar object and any calendar object stored on the server having a newer version than the calendar object stored on the user device.

C

User device

B

340 — Send new request for calendar synchronisation

356 — Receive notification

358 — Delete the notified calendar object stored on the user device comprising the secure token used to authenticate the previous request

362 — Receive versions of calendar objects from server and compare received versions to versions of calendar objects stored on the user device.

364 — Send calendar object with the secure token from the previous iteration + any other calendar object(s) stored on the user device that has a newer version than the version sent by the server.

366 — Request new calendar object + any calendar object stored on the server having a newer version than the calendar object stored on the user device.

Fig. 5C

40

Server                 User device

( C )

**372** — Authenticate the new request for calendar synchronisation using secure token received from user device

**374** — Authentication successful?

No         Yes

**376** — Restrict the user device from accessing the content data in calendar objects on the server

**378** — Send the new calendar object comprising the new secure token and any other calendar object stored on the server having a version that is newer on the server than on the user device

**384** — Store the new calendar object and any other calendar object(s) sent by the server.

**380** — Set the version of new calendar object stored on server to be older than the version sent to the user device.

( B )

**382** — Change status value stored on the server in association with the secure token used to perform the authentication to indicate that the secure token is used

Fig. 5D

AUTHENTICATE THE NEW REQUEST FOR CALENDAR SYNCHRONISATION
USING SECURE TOKEN RECEIVED FROM USER DEVICE

402

Compare the secure token from the calendar object
received from the user device and the secure token from
the calendar object stored on the server

404

Do the compared secure tokens
match? — No

406 — Yes

Determine expiry time from secure token from
calendar object received from user device

408

Has token expired?

Yes

No

410

Determine whether a
date associated with the
calendar object received
from the user device
matches the date of the
corresponding calendar
object on the server

412

Determine whether a
time associated with the
calendar object received
from the user device
matches the time of the
corresponding calendar
object stored on the
server

414

Decrypt the encrypted
data of the secure token
from the calendar object
stored on the server to
determine each parameter
value

416

Compare each decrypted
parameter value to each
corresponding new value

418

Determine a validation score based on the results

420

Is validation score lower
than predetermined
threshold? — Yes / No

Authentication is
unsuccessful

Authentication is
successful

RETURN

Fig. 6

Server            User device

**502** — Remove the new secure token from the new calendar object.

**504** — Remove content data from other calendar objects requested by the user device

**506** — Store indication that a request for calendar synchronisation from the user device was not authenticated.

**508** — Send the new calendar object without the new secure token and any other calendar object having a version that is newer on the server than on the user device, to the user device, each other calendar object sent to the user device being without content data.

**510** — Receive and store the new calendar object without the new secure token and any other calendar object without content data

**514** — Receive the new request for calendar synchronisation.

**512** — Send a new request for calendar synchronisation

**516** — Send notification to the user device that all of the calendar objects on the server are deleted.

**520** — Receive the notification

**518** — Designate user device as un-authorised

**522** — Delete all of the calendar objects stored on the user device

D

Fig. 7

Server                                                   User device

Fig. 8A

44

Server | User device

E

616
**Send versions of all calendar objects stored on the server**

618
**Receive and compare versions of calendar objects received from server to versions of calendar objects stored on the user device.**

622
**Receive the request for all calendar objects stored on the server**

620
**Request each calendar object stored on the server having a newer version than the calendar object stored on the user device.**

624
**Send all of the calendar objects with the dummy data.**

626
**Receive all calendar objects sent by server with the dummy data**

630
**Designate the user device as un-authorised**

628
**Store all the calendar objects with the dummy data**

D

## Fig. 8B

| | Mon<br>5 Jan '21 | Tue<br>6 Jan '21 | Wed<br>7 Jan '21 | Thu<br>8 Jan '21 | Fri<br>9 Jan '21 | Sat<br>10 Jan '21 | Sun<br>11 Jan '21 |
|---|---|---|---|---|---|---|---|
| 08:00 | | | | | | | |
| 09:00 | | Please<br>reauthenticate<br>http://www.url/c<br>om/reauth | | | | | |
| 10:00 | | | | | | | |
| 11:00 | | | | | | | |
| 12:00 | | | | | | | |
| 13:00 | | | | | | | |
| 14:00 | | | Please<br>reauthenticate<br>http://www.url/c<br>om/reauth | | | | |
| 15:00 | | | | | | | |
| 16:00 | | | | | | | |
| 17:00 | | | | | | | |
| 18:00 | | | | | | | |
| 19:00 | | | | | | | |
| 20:00 | | | | | | | |
| 21:00 | | | | | | | |
| 22:00 | | | | | | | |
| 23:00 | | | | | | | |
| 00:00 | | | | | | | |

Fig. 9

Server          User device

RESTRICT THE USER DEVICE FROM ACCESSING THE CONTENT DATA IN CALENDAR OBJECTS ON THE SERVER

702

Return a response indicating the user needs to re-authorise the user device.

704

Receive response

708

Designate the user device as un-authorised

706

Notify the user that the user device needs to be re-authorised

D

Fig. 10

Generate a first calendar object associated with a first date and comprising a first secure token — 1002

Store the first calendar object — 1004

Provide the first calendar object to the user device — 1006

Store a plurality of further calendar objects for communication to the user device, each of the further calendar objects being associated with a respective date and comprising content data defining an entry in the calendar — 1008

Receive a request for calendar synchronisation from the user device — 1010

Generate a second calendar object associated with a second date and comprising a second secure token — 1012

Store the second calendar object — 1014

F

Fig. 11A

F

1016

Notify the user device of a respective version of the first calendar object, the second calendar object, and each of the plurality of further calendar objects stored on the server, wherein the user device is notified that the first calendar object on the server has a version older than the first calendar object provided to the user device

1018

Receive from the user device the first calendar object and any calendar object stored on the user device having a version that is newer on the user device than the version notified by the server

1020

Authenticate the request by comparing the first secure token from the first calendar object received from the user device and the first secure token from the first calendar object stored on the server

1022

Yes ← Authentication successful? → No

1024

Provide to the user device the second calendar object comprising the second secure token and any calendar object of the plurality of further calendar objects stored on the server having a version that is newer on the server than on the user device

1026

Restrict the user device from accessing the content data in the further calendar objects

Fig. 11B

**EP 4 275 325 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160342955 A1